# EUROPÄISCHE PATENTSCHRIFT

(11) **EP 3 468 373 B1**
(45) Veröffentlichungstag und Bekanntmachung des Hinweises auf die Patenterteilung: **09.10.2024**
(21) Anmeldenummer: 17729417.0
(22) Anmeldetag: 29.05.2017
(51) Int. Cl.: A22C 25/08, A22B 7/00, A22C 25/12

(54) **TRANSPORTSTATION UND VERFAHREN ZUM TRANSPORTIEREN VON FISCHEN QUER ZU IHRER LÄNGSERSTRECKUNG IN TRANSPORTRICHTUNG SOWIE FISCHVERARBEITUNGSMASCHINE MIT EINER SOLCHEN TRANSPORTSTATION**
TRANSPORTING STATION AND METHOD FOR TRANSPORTING FISH IN A TRANSPORTING DIRECTION, WHICH IS TRANSVERSE TO THEIR LONGITUDINAL EXTENT, AND FISH-PROCESSING MACHINE HAVING SUCH A TRANSPORTING STATION
STATION DE TRANSPORT ET PROCÉDÉ DE TRANSPORT DE POISSONS PERPENDICULAREMENT À LEUR LONGUEUR DANS LA DIRECTION DE TRANSPORT AINSI QUE MACHINE POUR LE TRAITEMENT DE POISSON AVEC UNE TELLE STATION DE TRANSPORT

(30) Priorität: 14.06.2016 DE 102016110898
(43) Veröffentlichungstag der Anmeldung: 17.04.2019
(73) Patentinhaber: Nordischer Maschinenbau Rud. Baader GmbH + Co. KG, 23560 Lübeck (DE)
(72) Erfinder: PEIN, Roland, 23923 Herrnburg (DE); HOLTZ, Jörg, 23564 Lübeck (DE)
(74) Vertreter: Stork Bamberger Patentanwälte PartmbB
(86) Internationale Anmeldenummer: PCT/EP2017/062850
(87) Internationale Veröffentlichungsnummer: WO 2017/215901

(56) Entgegenhaltungen:
- DE-A1- 1 927 916
- JP-A- 2002 034 441
- JP-A- S6 098 935
- JP-A- S62 208 230
- US-E- R E29 432

## Beschreibung

Die Erfindung betrifft eine Transportstation, ausgebildet und eingerichtet zum Transportieren von Fischen quer zu ihrer Längserstreckung in Transportrichtung T, gemäß den Merkmalen des Anspruchs 1.

Des Weiteren betrifft die Erfindung eine Fischverarbeitungsmaschine gemäß den Merkmalen des Anspruchs 18.

Weiterhin befasst sich die Erfindung mit einem Verfahren zum Transportieren von Fischen quer zu ihrer Längserstreckung in Transportrichtung T gemäß den Merkmalen des Anspruchs 23.

Solche Transportstationen, Fischverarbeitungsmaschinen und Verfahren kommen in der Fisch verarbeitenden Industrie zum Einsatz, um Fische automatisch verarbeiten zu können, indem die Fische, insbesondere Lachs und andere Salmoniden, aber auch andere Fischgattungen, wie z.B. Weißfisch, mittels der Transportstation in den Wirkungsbereich einzelner Verarbeitungsstationen transportiert werden. Zum Verarbeiten der Fische, beispielsweise beim Ausführen des Bauchschnittes und insbesondere beim Ausführen des Köpfschnittes, also beim Abtrennen des Kopfes vom Rumpf, ist eine exakte Positionierung der Fische zu dem jeweiligen Werkzeug der Verarbeitungsstation von großer Bedeutung, um eine exakte Schnittführung und insbesondere eine hohe Ausbeute zu erzielen. Am Beispiel des Köpfschnittes kommt es darauf an, den Kopf möglichst ausbeuteeffizient vom Rumpf zu trennen, also den Kopf derart zu trennen, dass möglichst viel verzehrfähige Fleischmasse am Rumpf verbleibt.

Es sind Transportstationen bekannt, bei denen die Fische liegend quer zu ihrer Längserstreckung transportiert werden. Mit anderen Worten liegen die Fische beim Transport in Rücken- oder Seitenlage auf dem Transportelement. Die US 2,961,697 beschreibt eine solche Transportstation, bei der die Fische seitlich auf ihren Körperflanken liegen. Diese Transportart ist in der Handhabung einfach, da die Fische manuell oder automatisch auf dem Transportelement positioniert werden können. Durch die Seitenlage der Fische verschiebt sich jedoch die Symmetrieachse/Symmetrieebene (im Folgenden als Symmetrieachse bezeichnet) der Fische. Anders ausgedrückt liegen die Fische in der genannten Position nicht symmetrisch auf dem Transportelement. Die Symmetrieachse beschreibt dabei die exakte Mittellage jedes Fisches.

Dokument JP-A-2002034441 offenbart eine Vorrichtung zum Transportieren von Fischen nach dem Oberbegriff des Anspruchs 1.

Greift nun ein Bearbeitungswerkzeug, beispielsweise ein Messerpaar zur Ausübung eines V-Schnitts zum Köpfen des Fisches in den asymmetrisch liegenden Fisch, werden die beiden Seiten des Fisches ungleichmäßig geschnitten. Aufgrund der "Schieflage" des Fisches kann das Messerpaar den Kopf nicht ohne Ausbeuteverlust vom Rumpf abtrennen. Dieser Effekt tritt insbesondere dann auf, wenn geschlachtete und in ihrer Bauchhöhle geöffnete Fische auf ihren Körperflanken, also seitlich und Bauch oder Rücken voraus, transportiert werden. Das Verarbeiten von auf der Seite liegenden Fischen, insbesondere das Köpfen der Fische, ist auch aus einem anderen Grund nachteilig. Die bezogen auf die Symmetrieachse ungleichmäßige Gewichtsverteilung zwischen den beiden Körperhälften des Fisches kann aufgrund der undefinierten Position des Fisches zu einem unzureichenden Schnittergebnis führen. Das Ausrichten liegender Fische in eine in Bezug auf die Symmetrieachse definierte Position ist aufgrund produktabhängiger und/oder qualitätsabhängiger und/oder physikalischer Faktoren nicht oder nur mit erheblichem technischem Aufwand realisierbar. Als produktabhängiger Faktor ist beispielhaft die Fischart erwähnt, als qualitätsabhängiger Faktor z.B. der Zustand vor oder nach der Totenstarre und als physikalischer Faktor z.B. die Dimension des Fisches.

Transportstationen, bei denen die Fische hängend quer zu ihrer Längserstreckung transportiert werden, sind beispielsweise aus der DE 1 927 916 bekannt. Dieses Dokument offenbart eine Transportstation, bei der die Fische manuell unterhalb ihrer Brustflossen an dem Transportelement aufgehängt werden, so dass die Fische mit dem Kopf nach oben gerichtet in der hängenden Position der oder jeder Verarbeitungsstation zuführbar sind. Damit hängt das Schnitt- und Ausbeuteergebnis maßgeblich von der Präzision ab, mit der die Bedienperson die Fische einhängt. Zum Köpfen des Fisches ist dieser noch manuell um seine Längsachse in die richtige Trennposition zu drehen. Das manuelle Bestücken solcher Transportstationen mit Fischen einerseits und das manuelle Ausrichten der Fische für den Köpfschnitt andererseits führen zum einen zu einer undefinierten Ausrichtung der Fische und zum anderen zu einer hohen körperlichen Belastung der Bedienpersonen. Des Weiteren erfordern das Automatisieren solcher Arbeitsschritte einerseits und das Fixieren der Fische in der hängenden Position andererseits einen erheblichen konstruktiven Aufwand. Solche Transportstationen weisen daher diverse Nachteile auf, weshalb sich Transportstationen mit einem hängenden Transport der Fische, Kopf nach oben trotz der im Vergleich zu liegenden Fischen verbesserten Symmetrielage der Fische gegenüber dem liegenden Transport nicht durchgesetzt haben.

Wie bereits erwähnt, sind das Transportieren der Fische und deren symmetrische Ausrichtung während des Transports für die Verarbeitung der Fische von hoher Bedeutung. Alle aus dem Stand der Technik bekannten Lösungen weisen Probleme bei der symmetrischen Ausrichtung der Fische auf, so dass es bei der Verarbeitung der Fisch zu Ausbeuteverlusten kommt.

Der Erfindung liegt somit die Aufgabe zugrunde, eine konstruktiv einfache Transportstation und ein Verfahren vorzuschlagen, die bzw. das eine ausbeuteeffiziente und qualitätsunabhängige Verarbeitung der Fische gewährleistet. Die Aufgabe besteht weiterhin darin, eine entsprechende Fischverarbeitungsmaschine vorzuschlagen.

Diese Aufgabe wird durch eine Transportstation mit den eingangs genannten Merkmalen dadurch gelöst, dass der Fördereinrichtung eine Übernahmeeinrichtung zugeordnet ist, die ausgebildet und eingerichtet ist und derart in Wirkverbindung mit der Fördereinrichtung steht, dass die Fische automatisch aus der liegenden Position auf dem Transportpfad T_{L} der Fördereinrichtung in eine hängende Position auf einem Transportpfad T_{H} der Übernahmeeinrichtung umsetzbar sind. Durch den automatisch ausführbaren Lagenwechsel der Fische, nämlich das Aufnehmen der liegenden Fische vom Transportpfad T_{L} und Umsetzen in die hängende Position auf dem Transportpfad T_{H}, wird jeder Fisch unabhängig von seinem qualitativen Zustand nach dem Umsetzen in einer definierten und vor allem symmetrischen Position transportiert, so dass nachfolgende Verarbeitungsschritte mit hoher Präzision einerseits und reproduzierbar sowie ausbeuteeffizient andererseits ausgeführt werden können. Durch die erfindungsgemäße Ausgestaltung werden die Vorteile bekannter Transportstationen, nämlich zum einen das einfache Handhaben und der einfache konstruktive Aufbau eines liegenden Transports quer zur Längserstreckung und zum anderen eine optimierte Zentrierung der Fische beim hängenden Transport quer zur Längserstreckung, erreicht. Damit ist die Basis für eine besonders ausbeuteeffiziente Verarbeitung der Fische geschaffen.

Die beanspruchte Erfindung ist dadurch gekennzeichnet, dass die Übernahmeeinrichtung eine oberhalb der Fördereinrichtung zum liegenden Transport der Fische angeordnete Hängefördereinrichtung zum hängenden Transport der Fische entlang eines Transportpfads T_{H} und Mittel zum Umsetzen der Fische, nämlich zum Abnehmen der Fische von der Fördereinrichtung zum liegenden Transport der Fische sowie zum Halten der Fische während des hängenden Transports entlang des Transportpfads T_{H} umfasst. Damit ist eine konstruktiv einfache Transportstation geschaffen, die das einfache Handhaben im Zusammenhang mit dem liegenden Transport der Fische und das genaue Ausrichten der Fische im Zusammenhang mit dem hängenden Transport verbindet.

Gemäß der beanspruchten Erfindung geht die Hängefördereinrichtung in Transportrichtung T über die Fördereinrichtung hinaus, wobei im Überlappungsbereich von Fördereinrichtung und Hängefördereinrichtung in Transportrichtung T vor dem Austrittsbereich A der Fördereinrichtung der Umsetzbereich für die Fische von der Fördereinrichtung auf die Hängefördereinrichtung ausgebildet ist. Mit anderen Worten startet die Hängefördereinrichtung oberhalb der Fördereinrichtung, so dass die Fische mindestens zeitweise zwischen dem unteren Förderelement und der darüber liegenden Hängefördereinrichtung liegen. In diesem Umsetzbereich kann die Übernahme der Fische von der Fördereinrichtung auf die Hängefördereinrichtung zuverlässig erfolgen. Dadurch, dass die Hängefördereinrichtung jedoch in Transportrichtung T über die Fördereinrichtung hinausragt, den Transportpfad T_{H} demnach über den Transportpfad T_{L} hinausführt, entsteht in Transportrichtung T hinter der Fördereinrichtung unterhalb der Hängefördereinrichtung ein Freiraum, in den die an der Hängefördereinrichtung hängenden Fische schwenken können, um sich symmetrisch auszurichten.

Die beanspruchte Erfindung zeichnet sich dadurch aus, dass die Hängefördereinrichtung ein umlaufend antreibbares Transportelement umfasst, an dem das Mittel zum Abnehmen und Halten der Fische angeordnet ist, wobei das Mittel mindestens ein Greifmittel zum Greifen des Kopfes eines Fisches umfasst. Durch das umlaufende Transportelement der Hängefördereinrichtung durchläuft das Greifmittel regelmäßig den Umsetzbereich, so dass die von der Fördereinrichtung in den Umsetzbereich transportierten Fische von dieser abgenommen werden können. Die Hängefördereinrichtung und die Fördereinrichtung kommen im Umsetzbereich durch das Mittel zum Abnehmen und Halten der Fische in Wirkverbindung miteinander. Anders ausgedrückt wirken die Fördereinrichtung und die Hängefördereinrichtung im Umsetzbereich zusammen, indem die Fördereinrichtung die Fische taktgenau dann bereitstellt, wenn das Mittel zum Abnehmen und Halten den Umsetzbereich durchläuft. Dadurch, dass der Fisch am Kopf gegriffen wird, ist eine besonders stabile und präzise Ausrichtung des Fisches in die symmetrische Position gewährleistet.

Vorteilhafterweise ist das Transportelement der Hängefördereinrichtung eine um Umlenk- und/oder Antriebskörper, deren Mittel- und/oder Rotationsachsen R₁ horizontal und quer zur Transportrichtung T ausgerichtet sind, umlaufend angetriebene Transportkette, derart, dass das Mittel zum Abnehmen und Halten der Fische in einer vertikalen Ebene Eᵥ bewegt wird und im Umsetzbereich den geringsten Abstand zum Transportelement der Fördereinrichtung aufweist. Die Transportkette ist um mindestens zwei Umlenk- bzw. Antriebskörper geführt, wobei ein Umlenk- bzw. Antriebskörper oberhalb der Fördereinrichtung und der andere Umlenk- bzw. Antriebskörper in Transportrichtung T hinter der Fördereinrichtung angeordnet ist. Durch den oberhalb der Fördereinrichtung angeordneten Umlenk- bzw. Antriebskörper senkt sich das Mittel zum Greifen in der vertikalen Ebene Eᵥ zu Beginn des Umsetzbereiches von oben in Richtung auf die Fördereinrichtung zu, so dass eine Kollision mit dem horizontal in der Transportebene E_{H} zugeführten Fisch vermieden wird.

Die beanspruchte Erfindung ist dadurch gekennzeichnet, dass das Mittel zum Abnehmen und Halten der Fische mehrere mit dem Transportelement der Hängefördereinrichtung umlaufende Greifmittel umfasst, wobei jedes Greifmittel zwei Greifelemente aufweist, von denen mindestens ein Greifelement mit mindestens einem dem zu greifenden Fisch zugewandten Stachel versehen ist. Durch die Greifelemente einerseits und den mindestens einen Stachel andererseits kann auf einfache und effektive Weise eine form- und kraftschlüssige Verbindung zum Fischkopf hergestellt werden, so dass der Fisch sicher und stabil in der Aufnahmeposition gehalten werden kann.

Zweckmäßigerweise umfasst ein erstes Greifelement einen Greifarm mit einem am freien Ende verdrehfest und starr angeordneten Stachelkörper und das zweite Greifelement einen Greifarm mit einem am freien Ende drehbar gelagerten Stachelkörper, wobei die Greifarme in der vertikalen Ebene Eᵥ automatisch aufeinander zu in eine Halteposition und voneinander weg in eine Freigabeposition und umgekehrt bewegbar ausgebildet und eingerichtet sind und die Mittel- und/oder Drehachsen M der Stachelkörper in der Halteposition horizontal und parallel zur Transportrichtung T ausgerichtet sind. Die beiden einander zugewandten Stachelkörper am Ende der bewegbaren Greifarme bilden eine Art Zange, mittels der jeder Fisch sicher aufgenommen und gehalten werden kann. Dadurch, dass mindestens ein Stachelkörper drehbar gelagert ist, kann der Fisch beim Verlassen der Fördereinrichtung auf einfache Weise aus der liegenden Position in eine vertikale Position klappen bzw. schwenken. Mit der Bewegbarkeit der Greifarme aufeinander zu und voneinander weg ist durch das Auseinanderschwenken die Aufnahme eines Fisches zwischen den Greifarmen und den daran angeordneten Stachelkörpern und durch das Zusammenschwenken das Fixieren des Fisches zuverlässig gewährleistet. Letztlich "fädeln" die Fische im Umsetzbereich von unten in die geöffneten Greifarme ein, um dann durch das Schließen der Greifarme in einer definierten Position fixiert zu werden. Die horizontale und parallel zur Transportrichtung T ausgerichteten Mittel- und/oder Drehachsen in der Halteposition sorgen dafür, dass sich der Fisch beim Hängen an der Hängefördereinrichtung in einer symmetrischen Lage befindet.

Eine bevorzugte Weiterbildung zeichnet sich dadurch aus, dass ein erster Stachelkörper des ersten Greifelementes einen den Kopf eines Fisches vollständig durchdringenden Stachel aufweist, der in der Halteposition in den zweiten Stachelkörper eintaucht, weshalb der zweite Stachelkörper des zweiten Greifelementes eine Öffnung zur Aufnahme des Stachels des ersten Stachelkörpers aufweist, wobei um die Öffnung des zweiten Stachelkörpers herum mindestens zwei in den Kopf eindringende Stacheln angeordnet sind. Durch diese Ausführung weist das Greifmittel einen sicheren Halt der Fische auf, so dass auch Fische mit einem hohen Gewicht insbesondere beim Abklappen nach dem Verlassen der Fördereinrichtung zuverlässig und positionstreu fixiert sind.

Vorteilhafterweise bildet der einzige und zentrale Stachel des ersten Stachelkörpers in der Halteposition die horizontal und parallel zur Transportrichtung T ausgerichtete Schwenkachse S für jeden Fisch, so dass sich der Fisch nach dem Abklappen in die hängende Position in die symmetrische Lage auspendeln kann.

Eine bevorzugte Ausführungsform der Erfindung ist dadurch gekennzeichnet, dass das Transportelement zum liegenden Transport der Fische in Transportrichtung T Bauch oder Rücken voraus ausgebildet und eingerichtet ist und ein Förderband umfasst, das quer zur Transportrichtung T verlaufende und sich senkrecht zur Transportebene E_{H} erstreckende und mit dem Förderband umlaufende Stege zur Unterteilung des Förderbandes in einzelne Abschnitte zur Aufnahme jeweils eines einzelnen Fisches aufweist, wobei sich die Stege jeweils nur über einen Teil der Breite des Förderbandes erstrecken. Diese Stege, die auch Stollen genannt werden, bilden beim Einlegen auf das Förderband einen Anschlag für die Fische an ihrer Bauchseite oder bevorzugt an der Rückenseite, so dass die Fische im letztgenannten Fall mit dem Rücken am Steg anliegend und Bauch voraus transportiert werden. Durch die Erstreckung der Stege nur über einen Teil der Breite des Förderbandes, bevorzugt ist der Steg im Kopfbereich des Fisches ausgespart, endet also mit einem Abstand zu dem Seitenrand des Förderbandes, an dem der Kopf des Fisches platziert ist, ist Raum für den Eingriff des Greifmittels gegeben. Mit anderen Worten ist im Randbereich des Förderbandes ein freier Korridor geschaffen, der ein kollisionsfreies Greifen der Fische sicherstellt.

Besonders bevorzugt ist dem Förderband in Transportrichtung T mindestens einseitig ein ortsfestes Anschlagelement zum Positionieren jedes Fisches in seiner Längsausrichtung quer zur Transportrichtung T zugeordnet, wobei das Anschlagelement zum Positionieren des Fischkopfes in einer definierten Lage ausgebildet und eingerichtet ist. Dieses Anschlagelement begrenzt das Förderband seitlich, und zwar an der Seite, an der die Fische mit ihrem Kopf liegen. Die Fische stoßen beim Einlegen auf das Förderband mit der vordersten Spitze des Mauls an das Anschlagelement, so dass die Fische mit ihrem Kopf in dem zwischen den Stegen und dem Anschlagelement gebildeten Korridor liegen.

In einer vorteilhaften Weiterbildung ist das Förderband, das aus einem Obertrum als Transporttrum und einem Untertrum als Rückführtrum gebildet ist, um mindestens drei Umlenk- und/oder Antriebskörper, deren Mittel- und/oder Rotationsachsen R₂ horizontal und quer zur Transportrichtung T ausgerichtet sind, geführt und im Bereich des Obertrums einen ersten Abschnitt I, der eine Transportebene E_{H1} aufspannt, und einen zweiten in Transportrichtung T nachlaufenden Abschnitt II, der eine Transportebene E_{H2} aufspannt, aufweist, wobei die Transportebene E_{H2} oberhalb der Transportebene E_{H1} liegt, so dass die Fische vom Förderband aus der Transportebene E_{H1} über einen Verbindungsabschnitt III ansteigend in die Transportebene E_{H2} transportiert werden. Mit anderen Worten ist der Transporttrum, auf dem die Fische während des Transports liegen, vom Eintrittsbereich E bis zum Austrittsbereich A zunächst in der Transportebene E_{H1} horizontal, dann in Transportrichtung T ansteigend und anschließend in der Transportebene E_{H2} wieder horizontal ausgerichtet. Der Bereich, an dem der Transporttrum aus dem ansteigenden Verbindungsabschnitt in den Abschnitt der Transportebene E_{H2} übergeht, liegt vertikal unterhalb des Umlenk- und/oder Antriebskörpers der Hängefördereinrichtung. Durch diese Ausbildung wird das "Einfädeln" der Fische zwischen die Greifelemente wesentlich vereinfacht. Die von oben aus der vertikalen Ebene Eᵥ kommenden Greifelemente treffen mit geöffneten Greifarmen auf die von schräg unten nach oben transportierten Fische. Im Bereich des geringsten Abstandes zwischen dem Greifmittel und dem Transporttrum zu Beginn des Umsetzbereiches ist der Fisch dann exakt zwischen den beiden Stachelkörpern des Greifelementes positioniert. Damit kann eine sichere und kollisionsfreie Positionierung der Fische im Umsetzbereich sichergestellt werden.

In einer besonders bevorzugten Weiterbildung ist das Förderband mindestens im Umsetzbereich höhenverstellbar ausgebildet. Mit anderen Worten ist der die Transportebene E_{H2} bildende Abschnitt des Transporttrums in der Höhe verstellbar. Dadurch besteht die Möglichkeit, den Abstand zwischen dem Transporttrum und dem Greifmittel, also damit auch den Abstand zwischen Fischkopf und Greifmittel, zu variieren, um unabhängig von der Dicke des Fischkopfes stets ein Greifen des Fisches im Bereich der Symmetrieachse zu gewährleisten. Anders ausgedrückt kann jeder Fisch individuell in seiner Symmetrieachse gegriffen werden, was zu einer optimal ausgerichteten Hängeposition führt. Neben dem Höhenausgleich für unterschiedlich große Fische gewährleistet die Höhenverstellung auch den Ausgleich der Neigung der Symmetrieachse, die körperbedingt durch die Seitenlage des Fisches auf dem Transporttrum entsteht.

Als besonders vorteilhaft hat sich eine Ausführungsform herausgestellt, die dadurch gekennzeichnet ist, dass der die Transportebene E_{H2} aufspannende Abschnitt des Förderbandes um eine Schwenkachse C, die horizontal und quer zur Transportrichtung T ausgerichtet ist, mittels eines Antriebs schwenkbar ausgebildet ist. Durch das Schwenken um die Schwenkachse C, die vorzugsweise im Bereich des Übergangs von dem Verbindungsabschnitt des Transporttrums auf den die Transportebene E_{H2} aufspannenden Abschnitt des Transporttrums liegt und besonders bevorzugt der Mittel- und/oder Rotationsachse R₂ eines Umlenk- und/oder Antriebskörpers für die Transportkette entspricht, führen bereits kleine Schwenkbewegungen von wenigen Grad zu dem gewünschten Ausgleichseffekt in Bezug auf den Abstand zwischen dem Transporttrum und dem Greifmittel.

Eine bevorzugte Weiterbildung zeichnet sich dadurch aus, dass die Transportstation ein Messmittel zum Aufnehmen und/oder Ermitteln Fischgrößen relevanter Daten, insbesondere zur Bestimmung der Dicke des Kopfes senkrecht zur Transportebene E_{H} und der Breite des Kopfes in der Transportebene E_{H} in Transportrichtung T umfasst, wobei das Messmittel in Transportrichtung T vor dem Umsetzbereich angeordnet ist. Das Messmittel ist dazu ausgebildet und eingerichtet, einerseits die Höhe des Kopfes ausgehend von der Auflagefläche bis zum höchsten Punkt des Kopfes zu erfassen, um daraus die Symmetrieachse zu bestimmen. Andererseits ist das Messmittel dazu ausgebildet und eingerichtet, die Breite des Kopfes, also die Entfernung von der Unterseite des Unterkiefers bis zur Oberseite des Oberkiefers zu erfassen. Optional kann auch der Abstand von der Unterseite des Unterkiefers bis zum Steg, an dem der Fisch mit dem Rücken anliegt, erfasst werden. Damit lässt sich präzise das Greifen des Fisches in seiner jeweiligen Symmetrieachse steuern.

Zweckmäßigerweise ist das Messmittel ortsfest oberhalb der Fördereinrichtung angeordnet und umfasst eine Messfahne, die zur Auslenkung durch den Fischkopf ausgebildet und angeordnet ist. Genauer ist das Messmittel oberhalb des die Transportebene E_{H1} aufspannenden Abschnitts des Transporttrums angeordnet. Durch die Lage des Fischkopfes am Anschlagelement, den Transport des Fisches Bauch voraus in Transportrichtung T und den Abstand zwischen den Stegen des Förderbandes und dem Anschlagelement trifft die Messfahne in dem Korridor kollisionsfrei zwangsläufig auf den Fisch und kann so auf einfache und sichere Weise die notwendigen Messschritte ausführen und die gewonnenen Informationen liefern.

Vorteilhafterweise ist im Bereich des Messmittels, nämlich direkt unterhalb des Messmittels, am Anschlagelement ein ortsfestes Auflaufelement angeordnet, das zum Auflaufen des Fisches mit seinem Kopf ausgebildet und eingerichtet ist, derart, dass die dem Messmittel zugewandte obere Gleitfläche des Auflaufelementes, die parallel zur Transportebene E_{H1} ausgerichtet ist, die Bezugsebene für das Messmittel bei der Ermittlung der Dicke des Fischkopfes und der Bestimmung der Lage der Symmetrieachse des Fischkopfes bildet. Das Auflaufelement, das oberhalb des Förderbandes liegt, so dass das Förderband unterhalb des Auflaufelementes hindurch bewegbar ist, weist eine rampenartig in Transportrichtung T ansteigende Auflauffläche auf, die in die horizontale Gleitfläche übergeht. Durch das Auflaufelement kann der Frei-/Hohlraum unterhalb des Fischkopfes ausgefüllt werden, so dass der Fischkopf mit einer möglichst horizontal gerichteten Symmetrieachse unterhalb des Messmittels liegt. Des Weiteren können durch ein Auflaufelement Unregelmäßigkeiten in Bezug auf die Lage des Kopfes, bedingt z.B. durch fehlerhaftes oder ungenaues Einlegen der Fische, durch die Herkunft der Fische, die Fischgröße, die Art des Tötens, die Art der Zwischenlagerung oder andere Faktoren ausgeglichen werden.

Besonders bevorzugt ist im Umsetzbereich ebenfalls ein Auflaufelement, das zum Auflaufen des Fisches mit seinem Kopf ausgebildet und eingerichtet ist, ortsfest am Anschlagelement angeordnet, wobei beide Auflaufelemente bezüglich ihrer Höhe ausgehend von der Oberfläche des Förderbandes bis zur oberen Gleitfläche des Auflaufelementes gleich ausgebildet sind, so dass die mittels des Messmittels ermittelte Lage der Symmetrieachse des Fischkopfes im Umsetzbereich im Zusammenspiel mit der Höhenverstellung des Förderbandes reproduzierbar ist. Somit werden im Bereich des Greifmittels, das oberhalb des Umsetzbereiches angeordnet bzw. zum Greifen positioniert ist, die gleichen Gegebenheiten bzw. Randbedingungen bezüglich der Positionierung geschaffen wie am Messmittel. Mit anderen Worten ermöglicht das Auflaufelement im Umsetzbereich, dass der Fisch beim Greifen in die optimale Greifposition in Bezug auf das Greifmittel bringbar ist, um eine optimale Ausrichtung des Fisches zu erreichen, so dass das Greifmittel in die durch das Messmittel ermittelte Position der Symmetrieachse eingreifen kann.

In einer besonders vorteilhaften Weiterbildung umfasst die Transportstation eine Steuereinrichtung, wobei der oder jeder Antrieb für das Förderband der Fördereinrichtung und/oder der oder jeder Antrieb für die Höhenverstellung des Förderbandes der Fördereinrichtung und/oder das Messmittel an die Steuereinrichtung angeschlossen sind. Durch die Steuereinrichtung und die Anbindung der genannten Komponenten kann der Fisch automatisch und präzise in die optimale Greifposition transportiert werden, indem der Fisch individuell vermessen wird und auf der Basis der Messwerte die Transportgeschwindigkeit der Fische auf dem Förderband und die Höhenverstellung im Umsetzbereich des Transporttrums steuerbar sind. Mit der Steuerung der Antriebe für das Förderband der Fördereinrichtung kann die Transportgeschwindigkeit variiert werden, um z.B. eine Kollision der Stege des Förderbandes mit dem Fisch im Bereich des Abkippens zu vermeiden. Die Geschwindigkeitsanpassung des Förderbandes spielt auch eine wichtige Rolle bei der Positionierung des Fischkopfes unterhalb des Greifmittels. In Abhängigkeit der Breite des Fischkopfes kann die Fördergeschwindigkeit angepasst werden, um sicherzustellen, dass der Stachelkörper, der drehbar gelagert ist, zuerst am Fischkopf angreift, um ein Gegenlager für den starren Stachelkörper zu bilden, der den Fischkopf vollständig durchdringt. Dadurch kann ein Verdrehen des Kopfes beim Greifen wirksam verhindert werden.

Vorteilhafterweise entspricht der Abstand des Messmittels zum Anschlagelement quer zur Transportrichtung T, also der Messpunkt, dem Abstand der Mittel- und/oder Drehachsen M der Stachelkörper in der Halteposition zum Anschlagelement quer zur Transportrichtung T. Mit anderen Worten ist der Abstand a zwischen der vordersten und am Anschlagelement anliegenden Spitze des Fischmauls und dem mittleren Kontaktpunkt der Messfahne gleich dem Abstand b zwischen der vordersten und am Anschlagelement anliegenden Spitze des Fischmauls und dem Treffpunkt des den einen zentralen Stachel aufweisenden, starren Stachelkörpers.

Eine zweckmäßige Weiterbildung sieht vor, dass in Transportrichtung T hinter der Fördereinrichtung zum liegenden Fördern der Fische und neben dem Transportpfad T_{H} der Hängefördereinrichtung ein aus der Transportebene E_{H2} im Wesentlichen vertikal nach unten gerichtetes Prallelement angeordnet ist, dessen Prallfläche in Richtung der hängenden Fische ausgerichtet ist. Das Prallelement nimmt Energie des nach unten klappenden Fisches auf, um das Auspendeln des abgeklappten Fisches zu unterstützen und insbesondere zu beschleunigen, um den Fisch in seiner hängenden Position zu beruhigen.

Die Aufgabe wird auch durch eine Fischverarbeitungsmaschine mit den eingangs genannten Merkmalen dadurch gelöst, dass die Transportstation nach einem oder mehreren der Ansprüche 1 bis 17 ausgebildet und eingerichtet ist, wobei die oder jede Fischverarbeitungsstation im Bereich der hängenden Position der Fische angeordnet ist. Die sich daraus ergebenden Vorteile wurden bereits im Zusammenhang mit der Transportstation beschrieben, weshalb zur Vermeidung von Wiederholungen auf die entsprechenden Passagen verwiesen wird. Entscheidend ist, dass sich die Fische vor dem Erreichen der ersten Fischverarbeitungsstation in der hängenden Position befinden, um eine optimierte Ausrichtung der Fische insbesondere hinsichtlich ihrer Symmetrieachse zu gewährleisten, denn in dieser Position lassen sich die jeweiligen Verarbeitungsschritte mit der notwendigen Präzision einerseits und der maximalen Ausbeute andererseits ausführen.

Vorzugsweise ist die Fischverarbeitungsmaschine zum Köpfen von ungeschlachteten und/oder geschlachteten und in ihrer Bauchhöhle geöffneten Fischen ausgebildet und eingerichtet, indem eine Fischverarbeitungsstation entlang des Transportpfads T_{H} der Hängefördereinrichtung als Köpfvorrichtung ausgebildet und eingerichtet ist. Insbesondere beim Köpfen ist die symmetrische Lage der Fische von großer Bedeutung. Durch die erfindungsgemäße Ausführung kann jeder Fisch ausbeuteeffizient geköpft werden.

Eine besonders bevorzugte Ausführungsform ist dadurch gekennzeichnet, dass die Köpfvorrichtung eine Trenneinrichtung zum Trennen des Rumpfes von am Kopf hängenden Fischen umfasst, wobei die Trenneinrichtung ein Paar rotierend antreibbare Kreismesser umfasst und die Kreismesser V-förmig zueinander auf entgegengesetzten Seiten des Transportpfads T_{H} angeordnet sind. Durch die Position der hängenden Fische einerseits und die Anordnung des Kreismesserpaares andererseits lässt sich der Köpfschnitt in besonders effizienter Weise, also mit möglichst geringem Fleischverlust, ausführen. Mit anderen Worten können die Kreismesser so positionsgenau und symmetrisch in den Fisch geführt werden, dass der Fischkopf nahezu frei von Fleisch ist. Anders ausgedrückt verbleibt die maximale Fleischmenge, insbesondere auch das Nackenfleisch und das Fleisch im Bereich der Kragenknochen, am Rumpf.

Zweckmäßigerweise ist in Transportrichtung T hinter der Fördereinrichtung und vor der Köpfvorrichtung im Transportpfad T_{H} der Hängefördereinrichtung ein Messmittel zum Erkennen und/oder Ermitteln der Position der Kragenknochen jedes hängenden Fisches angeordnet. Mit diesem zusätzlichen Messmittel kann die Führung der Kreismesser noch präziser erfolgen, da die exakte Position, in der die Kreismesser eintauchen, bekannt ist.

Bevorzugt ist in Transportrichtung T hinter der Fördereinrichtung zum liegenden Transport der Fische und vor der Köpfvorrichtung im Transportpfad T_{H} der Hängefördereinrichtung ein Mittel zum Fangen der Brustflossen angeordnet. Mit dieser Ausführungsform kann jeder Fisch in der optimalen Ausrichtung den Kreismessern zum Trennen des Rumpfes vom Kopf zugeführt werden.

Die Aufgabe wird auch durch ein Verfahren mit den eingangs genannten Schritten gelöst, wobei die Fische mittels einer Übernahmeeinrichtung automatisch aus der liegenden Position in eine hängende Position umgesetzt werden, indem die Fische mittels der Übernahmeeinrichtung entlang des Transportpfads T_{L} von der Fördereinrichtung gegriffen und beim Transportieren entlang eines Transportpfads T_{H} in die hängende Position gebracht werden. Dieses Verfahren kombiniert in besonders einfacher und effektiver Weise die Vorteile des liegenden Transports insbesondere beim Einlegen und Ausrichten der Fische mit den Vorteilen des hängenden Transports insbesondere beim symmetrischen Positionieren und Bereitstellen für die eigentliche Verarbeitung.

Die sich aus den einzelnen Verfahrensschritten zum erfindungsgemäßen Verfahren ergebenden Vorteile wurden bereits im Zusammenhang mit der Transportstation und der Fischverarbeitungsmaschine erläutert, weshalb zur Vermeidung von Wiederholungen auf die entsprechenden Passagen verwiesen wird.

Vorzugsweise wird der Fisch Bauch voraus, mit dem Rücken an quer zur Transportrichtung T verlaufenden Stegen eines Förderbandes des Transportelementes und mit dem Kopf an ein dem Förderband zugeordneten Anschlagelement angelegt in Transportrichtung T transportiert, wobei in einem Abschnitt I des Förderbandes Fischgrößen relevante Daten, insbesondere die Dicke des Kopfes senkrecht zu der durch das Förderband aufgespannten Transportebene E_{H} und/oder die Breite des Kopfes in der Transportebene E_{H} in Transportrichtung T, mittels eines Messmittel aufgenommen und/oder ermittelt wird. Mit diesen Verfahrensschritten wird der manuell oder automatisch eingelegte Fisch in eine definierte Position gebracht, in der dann die erforderlichen Daten zum Fisch aufgenommen werden können. Anstelle der Breite des Kopfes kann auch der Abstand von der Unterseite des Unterkiefers der Bauch voraus transportierten Fische zum Steg, an dem der Fisch mit seinem Rücken anliegt, ermittelt werden. Alternativ kann der Fisch auch Rücken voraus transportiert werden, so dass der Fisch mit dem Bauch am Steg anliegt.

In einer bevorzugten Weiterbildung wird anhand der Dicke des Kopfes die Lage der Symmetrieachse des Kopfes ermittelt. Durch das Ermitteln der Mittelachse des Kopfes wird die Voraussetzung dafür geschaffen, den Fisch so zu greifen, dass er in der hängenden Position exakt symmetrisch ausgerichtet ist, wodurch die nachfolgende Verarbeitung besonders ausbeuteeffizient ausgeführt werden kann.

Vorteilhafterweise wird der Fisch in einem Abschnitt II des Förderbandes einem Greifmittel zugeführt, das den Fisch am Kopf greift, wobei die Position des Kopfes senkrecht zum Greifmittel durch eine Höhenverstellung des Abschnittes II des Förderbandes in Abhängigkeit der vom Messmittel aufgenommenen und/oder ermittelten Daten eingestellt wird, so dass der Fischkopf im Bereich des Greifmittels in derselben Ebene liegt wie im Bereich des Messmittels. Durch die Höhenverstellung wird jeder Fisch unabhängig von seiner Größe in die optimale Greifposition bewegt, die zuvor durch das Messmittel aufgenommen und/oder ermittelt wurde.

Eine vorteilhafte Weiterführung des Verfahrens sieht vor, dass zum Greifen des Fischkopfes bauchseitig am Unterkiefer und rückenseitig am Oberkiefer jeweils ein Stachelkörper in den Fischkopf eindringt, indem zwei die Stachelkörper tragenden Greifarme des Greifmittels aus einer Freigabeposition in eine Halteposition bewegt werden. Durch das beidseitige Eindringen der Stachelkörper ist ein sicherer Halt gegeben, um die Fische in der optimalen Ausrichtung weiter transportieren zu können.

Gemäß der beanspruchten Erfindung wird jedes Greifmittel entlang einer Hängefördereinrichtung der Übernahmeeinrichtung in einer Ebene Eᵥ, die senkrecht zur Transportebene E_{H} ausgerichtet ist, über den Transportpfad T_{L} der Fördereinrichtung hinaus entlang des Transportpfads T_{H} transportiert, so dass die am Kopf gegriffenen Fische nach dem Verlassen der Fördereinrichtung in die hängende Position schwenken. Das Zuführen der Fische erfolgt zunächst in der liegenden Position, um die Ausrichtung zu optimieren. Noch im Liegen werden die Fische in der optimalen Ausrichtung gegriffen. Indem die Fische dann am Kopf hängend über die Fördereinrichtung hinaus entlang des Transportpfads T_{H}, der eine einfache Verlängerung des Transportpfads T_{L} darstellt, transportiert werden, wird den Fischen quasi ihre Unterlage entzogen, so dass die Fische dann frei hängend auspendeln können. Damit ist ein besonders einfaches und zuverlässiges Umsetzen der Fische gewährleistet.

Besonders bevorzugt werden die Fische beim Transportieren entlang des Transportpfads T_{L} vom Abschnitt I in den Abschnitt II des Förderbandes von unten zwischen den in der Freigabeposition befindlichen Greifarmen, die in der vertikalen Ebene Eᵥ von oben in Richtung des Förderbandes bewegt werden, positioniert. Das Zuführen kann auch rein horizontal erfolgen. Allerdings lassen sich die Fische in der bevorzugten Weise von unten besonders einfach kollisionsfrei zwischen die geöffneten Greifarme in der Freigabeposition "einfädeln". In dem Umsetzbereich des Abschnittes II treffen also die von oben kommenden Greifarme in ihrer geöffneten Stellung auf die von unten zugeführten Fische, so dass diese leicht und präzise zwischen den dann entlang des Transportpfads T_{H} bewegbaren Greifarmen positioniert werden können.

Dazu werden die Greifarme bevorzugt in der vertikalen Ebene Eᵥ aufeinander zu bewegt, so dass ein starrer Stachelkörper mit einem einzelnen Stachel den Kopf des Fisches von der Rückenseite her vollständig durchdringt, während ein zweiter, drehbar gelagerter Stachelkörper mit mindestens zwei Stacheln von der Bauchseite her in den Kopf eindringt. Während der Stachelkörper, der von der Bauchseite her den Fischkopf quasi als Gegenlager stützt, dringt der Stachelkörper mit seinem einzigen Stachel von der Rückenseite vollständig durch den Kopf, so dass eine besonders sichere Fixierung des Fisches existiert. Ein besonderer Vorteil besteht darin, dass der vollständig durchdringende Stachel die Drehachse für den Fisch beim Abklappen bildet, wobei das Abklappen durch den drehbaren Stachelkörper unterstützt wird.

Als besonders vorteilhaft hat sich herausgestellt, dass die Transportgeschwindigkeit des Förderbandes in Abhängigkeit der aufgenommenen und/oder ermittelten Daten, insbesondere der Breite des Kopfes in der Transportebene E_{H} in Transportrichtung T, verändert wird, wenn sich ein Fisch im Bereich des Greifmittels befindet, derart, dass der drehbare Stachelkörper mit den mindestens zwei Stacheln zeitgleich mit dem oder zeitlich vor dem starren Stachelkörper auf den Fischkopf trifft. Die Fische haben alle einen unterschiedlich breiten Kopf bzw. einen unterschiedlichen Abstand zwischen der Unterseite des Unterkiefers und dem Steg, an dem sie anliegen. Um unabhängig von dieser Lage und/oder Größe stets den optimalen Greifpunkt zu treffen und/oder ein Verschieben des Fisches durch das vorzeitige Auftreffen insbesondere des starren Stachelkörpers mit dem einzigen starren Stachel des Greifmittels am Fischkopf zu verhindern, wird die Transportgeschwindigkeit unmittelbar vor dem Greifen gegebenenfalls reduziert, um sofort nach dem Greifen wieder in die ursprüngliche Transportgeschwindigkeit beschleunigt zu werden.

Vorteilhafterweise wird die Transportgeschwindigkeit des Förderbandes verändert, wenn sich ein Fisch im Austrittsbereich A der Fördereinrichtung befindet, derart, dass eine Kollision des Förderbandes bzw. der daran angeordneten Stege mit dem abklappenden Fisch vermieden wird, wobei die Änderungen der Transportgeschwindigkeiten beim Greifen der Fische einerseits und beim Abklappen der Fische andererseits durch die Teilung des Förderbandes aufeinander abgestimmt sind. Beim Abklappen des Fisches besteht die Gefahr, dass der gerade noch auf dem Förderband liegende Fisch durch das weiterlaufende Förderband und besonders durch den aufgerichteten Steg, an dem der Fisch gelegen hat, kontaktiert wird. Um das zu vermeiden, wird die Geschwindigkeit des Förderbandes kurzzeitig reduziert, so dass eine Kollision ausgeschlossen wird. Die Teilung des Förderbandes, also der Abstand der Stege und damit der Fische auf dem Förderband ist so gewählt, dass eine Geschwindigkeitsanpassung in einem Bereich den anderen Bereich nicht beeinflusst. Anstelle der Reduzierung der Transportgeschwindigkeit des Förderbandes der Fördereinrichtung kann auch die Hängefördereinrichtung entsprechend beschleunigt werden.

Besonders bevorzugt laufen die Fische mit ihrem Fischkopf zum Aufnehmen und/oder Ermitteln der Fischgrößen relevanten Daten auf ein Auflaufelement auf, derart, dass der Fischkopf bezogen auf die Transportebene E_{H} angehoben wird. Dadurch, dass der Fischkopf auf das Auflaufelement aufläuft, wird zum einen der Freiraum unterhalb des Fischkopfes ausgefüllt und zum anderen der Fischkopf in einer definierten Lage gehalten, wodurch ein präzises Aufnehmen und/oder Ermitteln der relevanten Größen unterstützt wird.

Entsprechend laufen die Fische im Bereich des Greifmittels ebenfalls auf ein entsprechendes Auflaufelement auf, so dass die Fische mit ihrem Kopf im Bereich des Greifmittels in derselben Ebene liegen wie im Bereich des Messmittels.

Das Verfahren lässt sich besonders geeignet mit einer Transportstation nach einem der Ansprüche 1 bis 17 ausführen. Gerade für das Köpfen von Fischen ist die Fischverarbeitungsmaschine nach einem der Ansprüche 18 bis 22 geeignet.

Weitere zweckmäßige und/oder vorteilhafte Merkmale und Weiterbildungen sowie bevorzugte Verfahrensschritte ergeben sich aus den Unteransprüchen und der Beschreibung. Besonders bevorzugte Ausführungsformen der Transportstation und der Fischverarbeitungsmaschine sowie das Verfahren werden anhand der beigefügten Zeichnung näher erläutert. In der Zeichnung zeigt:
- Fig. 1: eine schematische Darstellung einer ersten Ausführungsform der erfindungsgemäßen Transportstation in Vorderansicht,
- Fig. 2: eine schematische und vereinfachte Darstellung einer weiteren Ausführungsform der erfindungsgemäßen Transportstation in Vorderansicht,

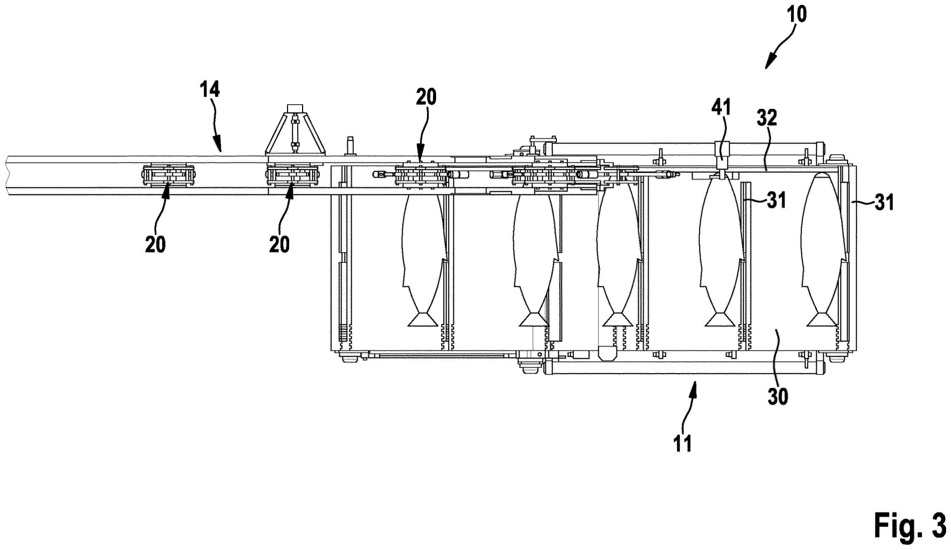

- Fig. 3: eine schematische Darstellung der Transportstation gemäß Figur 1 in Draufsicht,

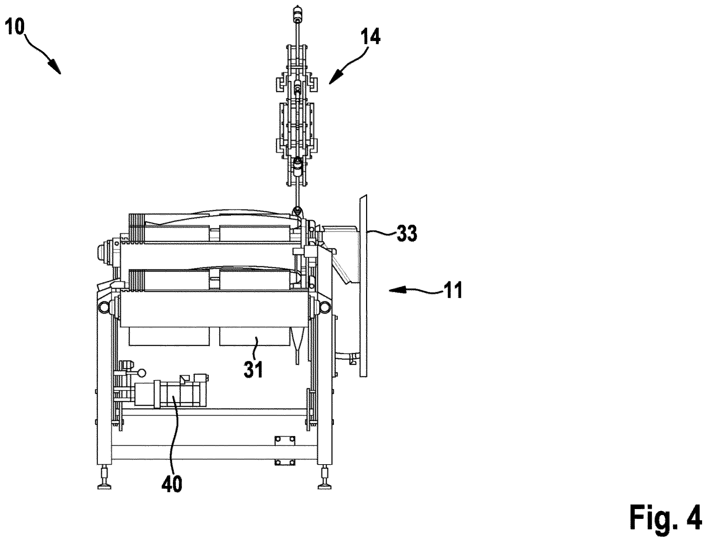

- Fig. 4: eine schematische Darstellung der Transportstation gemäß Figur 1 in Seitenansicht (in Transportrichtung T gesehen),
- Fig. 5: eine vereinfachte Darstellung des Abschnitts I des Förderbandes mit Messmittel,

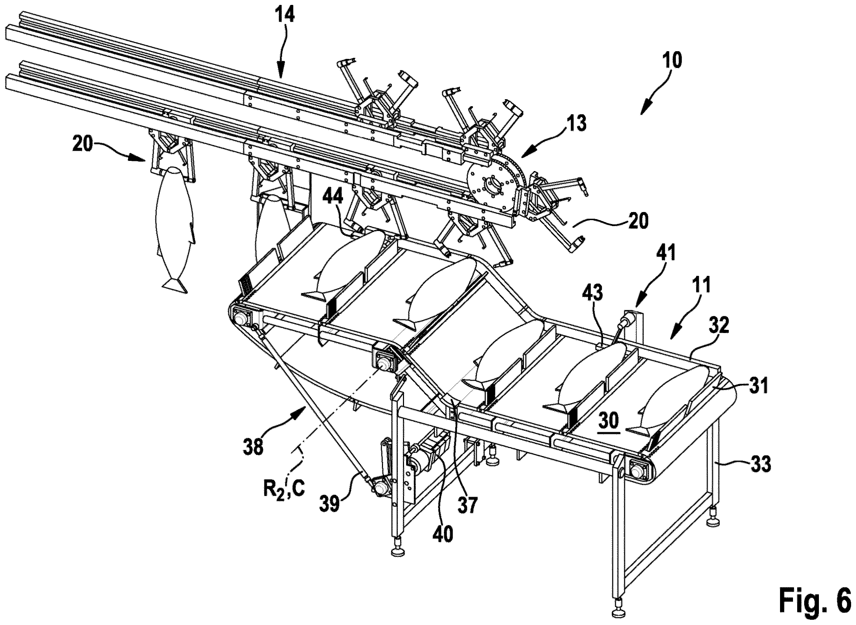

- Fig. 6: eine perspektivische Darstellung der Transportstation und insbesondere des Abschnittes II des Förderbandes mit der Höhenverstellung des Förderbandes,

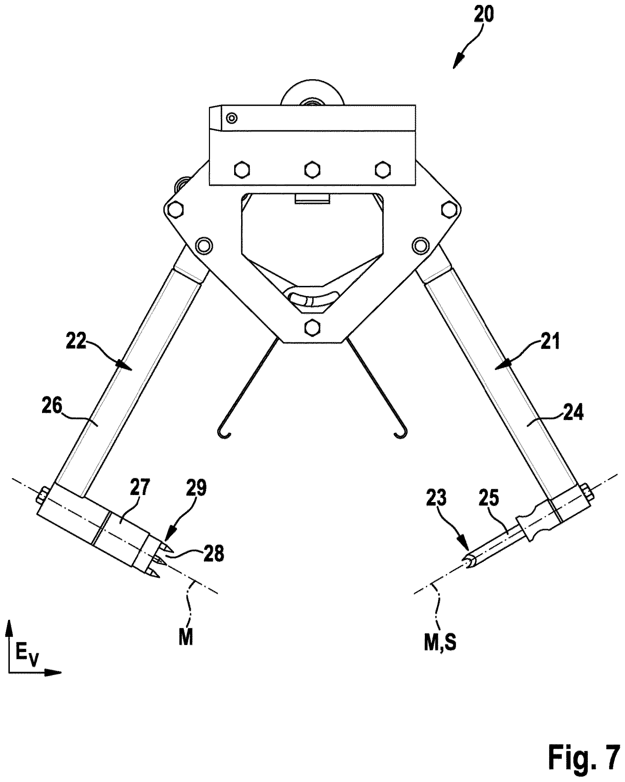

- Fig. 7: eine vergrößerte Darstellung des Greifmittels in Freigabeposition,

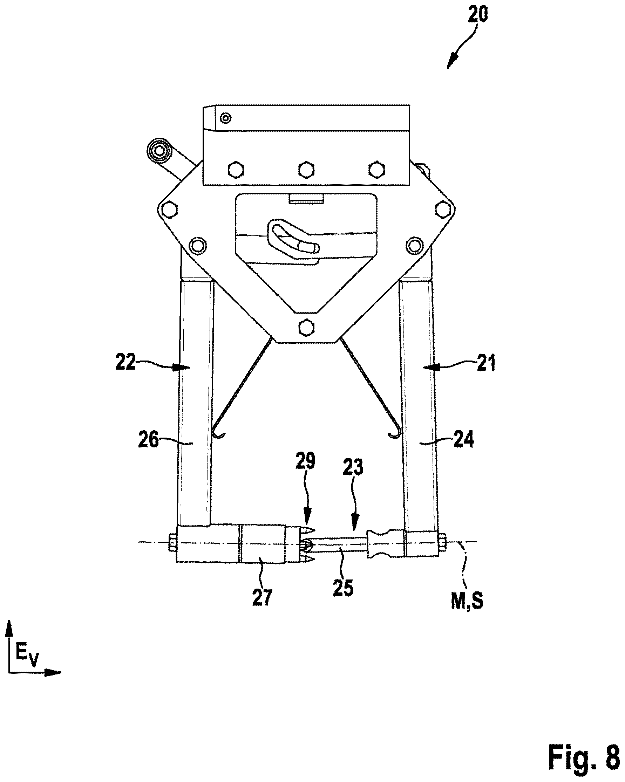

- Fig. 8: eine vergrößerte Darstellung des Greifmittels in Halteposition,

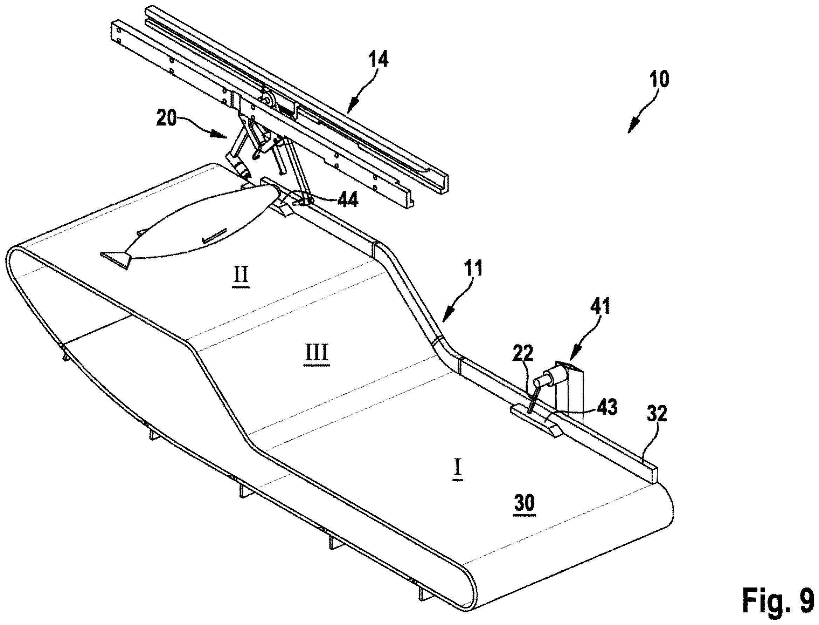

- Fig.9: eine schematische vergrößerte Darstellung der Auflaufelemente,
- Fig. 10eine: schematische Darstellung einer Fischverarbeitungsmaschine mit der ersten Ausführungsform der erfindungsgemäßen Transportstation in Vorderansicht.

Die in der Zeichnung dargestellte Transportstation dient zum Positionswechsel von geschlachteten und in ihrer Bauchhöhle geöffneten Lachsen während des Transports Bauch voraus in Transportrichtung T aus einer liegenden in eine hängende Position. Selbstverständlich ist die erfindungsgemäße Transportstation auch zum Umsetzen der Fische ausgebildet und eingerichtet, die Rücken voraus liegend transportiert werden. Die Erfindung bezieht sich in gleicher Weise auch auf Transportstationen, mit denen andere Salmoniden und Fische im Allgemeinen, und zwar geschlachtet oder ungeschlachtet, aus einer liegenden Position in eine hängende Position bringbar sind.

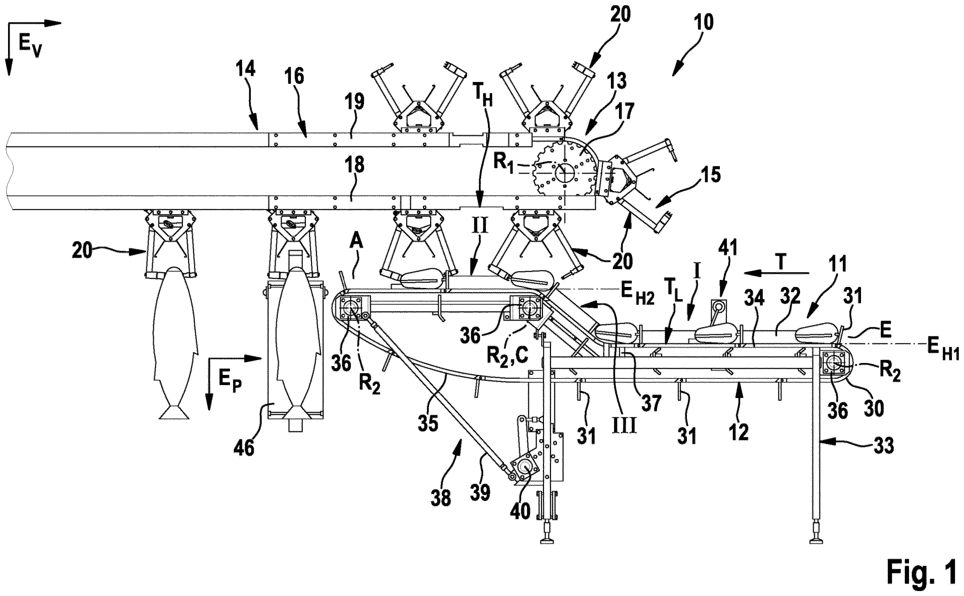

Die in der Figur 1 dargestellte Transportstation 10 ist zum Transportieren von Fischen quer zu ihrer Längserstreckung in Transportrichtung T ausgebildet und eingerichtet und umfasst eine Fördereinrichtung 11 zum liegenden Transport vereinzelter Fische entlang eines Transportpfads T_{L} von einem Eintrittsbereich E der Fördereinrichtung 11 zu einem Austrittsbereich A der Fördereinrichtung 11, wobei die Fördereinrichtung 11 ein umlaufend antreibbares Transportelement 12 umfasst. Wie erwähnt, kann der liegende Transport der Fische Bauch oder Rücken voraus erfolgen. Die Fische bzw. mehrere Fische können dabei gemeinsam auf dem Transportelement liegen, allerdings vereinzelt und beabstandet zueinander.

Diese Transportstation 10 zeichnet sich erfindungsgemäß dadurch aus, dass der Fördereinrichtung 11 eine Übernahmeeinrichtung 13 zugeordnet ist, die ausgebildet und eingerichtet ist und derart in Wirkverbindung mit der Fördereinrichtung 11 steht, dass die Fische automatisch aus der liegenden Position auf dem Transportpfad T_{L} der Fördereinrichtung 11 in eine hängende Position auf einem Transportpfad T_{H} der Übernahmeeinrichtung 13 umsetzbar sind. Mit der Wirkverbindung ist das Interagieren zwischen der Fördereinrichtung 11 zum liegenden Zuführen der Fische und der Übernahmeeinrichtung 13 zum Umsetzen der Fische aus der liegenden in die hängende Position beschrieben, derart, dass die Anordnung und Zuordnung von Fördereinrichtung 11 und Übernahmeeinrichtung 13 zueinander das kollisionsfreie in Kontakt treten der Übernahmeeinrichtung 13 mit dem Fisch gewährleisten, um diesen dann greifen und in die vertikale Position bringen zu können.

Die im Folgenden beschriebenen Merkmale und Weiterbildungen sowie Verfahrensschritte stellen für sich betrachtet oder in Kombination miteinander bevorzugte Ausführungsformen dar. Es wird ausdrücklich darauf hingewiesen, dass Merkmale und Verfahrensschritte, die in den Ansprüchen und/oder der Beschreibung und/oder der Zeichnung zusammengefasst oder in einer gemeinsamen Ausführungsform beschrieben sind, auch funktional eigenständig die weiter oben beschriebene Transportstation 10 sowie das weiter unten beschriebene Verfahren weiterbilden können.

Das Transportelement 12 kann ein umlaufend antreibbares Transportband oder eine Transportkette sein, auf dem die Fische einzeln und mit ihrem Kopf auf einen Seitenrand des Transportelementes 12 gerichtet liegen, so dass die Fische quer zu ihrer Längserstreckung, vorzugsweise Bauch voraus, in Transportrichtung T transportierbar sind. Dem Transportelement 12 ist mindestens ein nicht explizit dargestellter Antrieb zum umlaufenden Antreiben des endlosen Transportelementes 12 zugeordnet, wobei das Transportelement 12 intermittierend oder bevorzugt kontinuierlich und in der Geschwindigkeit variabel antreibbar ist. Die Fördereinrichtung 11 zum liegenden Transport der Fische und die Übernahmeeinrichtung 13 zum Umsetzen der Fische aus der liegenden Position in die hängende Position sind derart zueinander angeordnet, dass mindestens ein Bereich existiert, an dem die Fördereinrichtung 11 und die Übernahmeeinrichtung 13 interagieren können.

Gemäß der beanspruchten Erfindung umfasst die Übernahmeeinrichtung 13 eine oberhalb der Fördereinrichtung 11 zum liegenden Transport der Fische angeordnete Hängefördereinrichtung 14 zum hängenden Transport der Fische entlang eines Transportpfads T_{H} und Mittel 15 zum Umsetzen der Fische, nämlich zum Abnehmen der Fische von der Fördereinrichtung 11 zum liegenden Transport der Fische sowie zum Halten der Fische während des hängenden Transports entlang des Transportpfads T_{H}.·Mit anderen Worten ist die Hängefördereinrichtung 14 vertikal nach oben beabstandet zur Transportebene E_{H} der Fördereinrichtung 11 angeordnet, so dass das Mittel 15 zum Umsetzen der Fische, das der Hängefördereinrichtung 14 zugeordnet ist, kollisionsfrei oberhalb der Fördereinrichtung 11 zum Umsetzen der Fische entlang bewegbar ist.

Die Hängefördereinrichtung 14 und die Fördereinrichtung 11 bilden zum Umsetzen der Fische einen Überlappungsbereich, also einen Bereich, in dem die Hängefördereinrichtung 14 und die Fördereinrichtung 11 übereinander und parallel zueinander angeordnet sind. Der Freiraum der Fördereinrichtung 11 wird quasi nach oben durch die Hängefördereinrichtung 14 begrenzt. Vorzugsweise beginnt die Hängefördereinrichtung 14 jedoch in Transportrichtung T gesehen mit einem Abstand zum Eintrittsbereich E der Fördereinrichtung 11. Mit anderen Worten ist ein Bereich oberhalb des Eintrittsbereiches E der Fördereinrichtung 11 frei. Die Hängefördereinrichtung 14 erstreckt sich beginnend mit einem Abstand zum Eintrittsbereich E der Fördereinrichtung 11 mindestens bis zum Austrittsbereich A der Fördereinrichtung 11.

Gemäß der beanspruchten Erfindung geht die Hängefördereinrichtung 14 in Transportrichtung T über die Fördereinrichtung 11 hinaus, wobei im Überlappungsbereich von Fördereinrichtung 11 und Hängefördereinrichtung 14 in Transportrichtung T vor dem Austrittsbereich A der Fördereinrichtung 11 der Umsetzbereich für die Fische von der Fördereinrichtung 11 auf die Hängefördereinrichtung 14 ausgebildet ist. Der Transportpfad T_{L} deckt sich im Umsetzbereich mit dem Transportpfad T_{H} und setzt diesen linear in Transportrichtung T fort. Hinter dem Austrittsbereich A der Fördereinrichtung 11 ist der Bereich unterhalb der Hängefördereinrichtung 14 frei.

Die Hängefördereinrichtung 14 umfasst, gemäß der Erfindung, ein umlaufend antreibbares Transportelement 16, an dem das Mittel 15 zum Abnehmen und Halten der Fische angeordnet ist. Dem Transportelement 16 ist mindestens ein nicht dargestellter Antrieb zum umlaufenden Antreiben des endlosen Transportelementes 16 zugeordnet, wobei das Transportelement 16 intermittierend oder bevorzugt kontinuierlich und in der Geschwindigkeit variabel antreibbar ist. Das Transportelement 16 kann ein Transportgurt, ein Transportband oder dergleichen sein. Vorzugsweise ist das Transportelement 16 als einfache oder doppelte Transportkette ausgebildet und um Umlenk- und/oder Antriebskörper 17 geführt. In einer vorteilhaften Ausführung sind zwei Umlenk- und/oder Antriebskörper 17, beispielsweise in Form von Walzen, Zahnrädern oder dergleichen, vorgesehen. Die Mittel- und/oder Rotationsachsen R₁ der Umlenk- und/oder Antriebskörper 17 sind horizontal und quer zur Transportrichtung T ausgerichtet. Dadurch wird das Mittel 15 zum Abnehmen und Halten der Fische in einer vertikalen Ebene Eᵥ bewegt. Anders ausgedrückt hängt das Mittel 15 zum Abnehmen und Halten der Fische an einem Untertrum 18 des Transportelementes 16 als Transporttrum nach unten in Richtung der Fördereinrichtung 11, während es an einem Obertrum 19 des Transportelementes 16 als Rückführtrum nach oben steht. Im Bereich der Umlenk- und/oder Antriebskörper 17 folgt das Mittel 15 dem Radius der Umlenk- und/oder Antriebskörper 17 und bewegt sich an dem dem Eintrittsbereich E der Fördereinrichtung 11 zugewandten Ende zu Beginn des Umsetzbereiches auf die Fördereinrichtung 11 zu und an dem entgegengesetzten Ende nach oben. Im Umsetzbereich weist das Mittel 15 den geringsten Abstand zum Transportelement 12 der Fördereinrichtung 11 auf.

Das Mittel 15 zum Abnehmen und Halten der Fische umfasst, gemäß der Erfindung, mehrere mit dem Transportelement 16 der Hängefördereinrichtung 14 umlaufende Greifmittel 20, wobei jedes Greifmittel 20 zwei Greifelemente 21, 22 aufweist, von denen mindestens ein Greifelement 21 oder 22 mit mindestens einem dem zu greifenden Fisch zugewandten Stachel 23, 29 versehen ist. Die Greifelemente 21, 22 bilden ein zangenartiges Werkzeug. Dazu umfasst ein erstes Greifelement 21 einen Greifarm 24 mit einem am freien Ende verdrehfest und starr angeordneten Stachelkörper 25 und das zweite Greifelement 22 einen Greifarm 26 mit einem am freien Ende drehbar gelagerten Stachelkörper 27. Die beiden Greifarme 24, 26 sind in der vertikalen Ebene Eᵥ automatisch aufeinander zu in eine Halteposition und voneinander weg in eine Freigabeposition und umgekehrt bewegbar ausgebildet und eingerichtet. Dabei sind die Mittel- und/oder Drehachsen M der Stachelkörper 25, 27 in der Halteposition horizontal und parallel zur Transportrichtung T ausgerichtet. Die Greifelemente 21, 22 sind jeweils L-förmig ausgebildet. Jeder Greifarm 24, 26 bildet den langen Schenkel des L's, während die Stachelkörper 25, 27 den kurzen Schenkel bilden. Die Stachelkörper 25, 27 sind in der Ebene Eᵥ angeordnet und aufeinander zu gerichtet.

Zur Ausübung der Schwenkbewegung ist den Greifarmen 24, 26 mindestens ein nicht explizit dargestellter Antrieb und/oder Stellmechanismus zugeordnet. Beiden Greifarmen 24, 26 kann auch ein gemeinsamer Antrieb und/oder Stellmechanismus zugeordnet sein. Bevorzugt sind die beiden Greifarme 24, 26 jedoch individuell steuerbar, beispielsweise mittels eines Pneumatikzylinders oder dergleichen. Die Antriebe und/oder Stellmechanismen für Greifarme 24, 26 sind bevorzugt steuerbar, also insbesondere hinsichtlich der Geschwindigkeit der Schwenkbewegung einerseits und des Grad/des Winkels zum Öffnen und Schließen der Greifarme zueinander andererseits. Die Schwenkbewegung kann auch kurvengesteuert ausgeführt werden.

Anstelle des durch die Greifarme 24, 26 gebildeten Klemmmechanismus können auch andere Greifmittel 20, beispielsweise in der Gestalt von Klemmbacken oder dergleichen eingesetzt werden. Mehrere der Greifmittel 20 sind vorzugsweise gleichmäßig verteilt, also mit gleichmäßigem Abstand zueinander, entlang der Transportkette verteilt. Jedes dieser Greifmittel 20 durchläuft beim umlaufenden Antrieb der Transportkette den Umsetzbereich. Es besteht weiterhin die Möglichkeit, dass das Greifmittel einen starren Arm als Gegenlager für einen bewegbaren Greifarm umfasst.

In einer bevorzugten Ausführungsform weist ein erster Stachelkörper 25 des ersten Greifelementes 21 einen den Kopf eines Fisches vollständig durchdringenden Stachel 23 aufweist, der in der Halteposition in den zweiten Stachelkörper 27 eintaucht, weshalb der zweite Stachelkörper 27 des zweiten Greifelementes 22 eine Öffnung 28 zur Aufnahme des Stachels 23 des ersten Stachelkörpers 25 aufweist, wobei um die Öffnung 28 des zweiten Stachelkörpers 27 herum mindestens zwei in den Kopf eindringende Stacheln 29 angeordnet sind. Der zweite Stachelkörper 27 kann auch drei oder mehr konzentrisch um die Öffnung 28 angeordnete Stacheln 29 aufweisen. In der dargestellten Transportstation 10 ist der erste Stachelkörper 25 mit einem einzigen Stachel 23 versehen und starr ausgebildet. Der zweite Stachelkörper 27 ist als Drehhülse ausgebildet, derart, dass die Drehhülse drehbar auf einer Achse gelagert ist. Der Greifarm 24 mit dem starren Stachelkörper 25 kann wahlweise dem bauchseitig (am Unterkiefer) angreifenden Greifmittel 22 oder bevorzugt dem rückenseitig (Oberkiefer) angreifenden Greifmittel 21 zugeordnet sein. Entsprechendes gilt für den Greifarm 26. In weiteren Ausführungsformen können die Stachelkörper 25 und 27 auch eine andere Ausgestaltung aufweisen.

Der Stachel 23 des starren Stachelköpers 25 ist bevorzugt als eine Art Hohlbohrer ausgebildet. Die Stacheln 29 des drehbaren Stachelkörpers 27 sind als eine Art Spikes ausgebildet. Alle Stacheln 23, 29 können aber auch andere Formen und Ausgestaltungen aufweisen. Auch können die Anzahl und die Anordnung der Stacheln 23, 29 variieren. Es besteht in nicht dargestellten Weiterbildungen weiterhin die Möglichkeit, dass zwei drehbar gelagerte Stachelkörper mit jeweils mindestens zwei Stacheln oder zwei starre Stachelkörper mit jeweils einem Stachel vorgesehen sind. Die Stacheln 23, 29 können auch eine Länge aufweisen, dass sie alle nur in den Kopf eindringen, nicht aber durchdringen. Anstelle der Stachelkörper 25, 27 können auch andere Fixiermittel zum Klemmen, Spießen oder dergleichen vorgesehen sein.

Vorzugsweise bildet in dem dargestellten Ausführungsbeispiel der einzige und zentrale Stachel 23 des ersten und starren Stachelkörpers 25 in der Halteposition die horizontal und parallel zur Transportrichtung T ausgerichtete Schwenkachse S für jeden Fisch, so dass der fixierte Fisch beim Verlassen des Transportelementes 12 der Fördereinrichtung 11 nach unten klappt. Die drehbare Lagerung des zweiten Stachelkörpers 27 unterstützt diesen Vorgang, wobei der Stachel 23 des ersten, starren Stachelkörpers 25 als Drehachse fungiert.

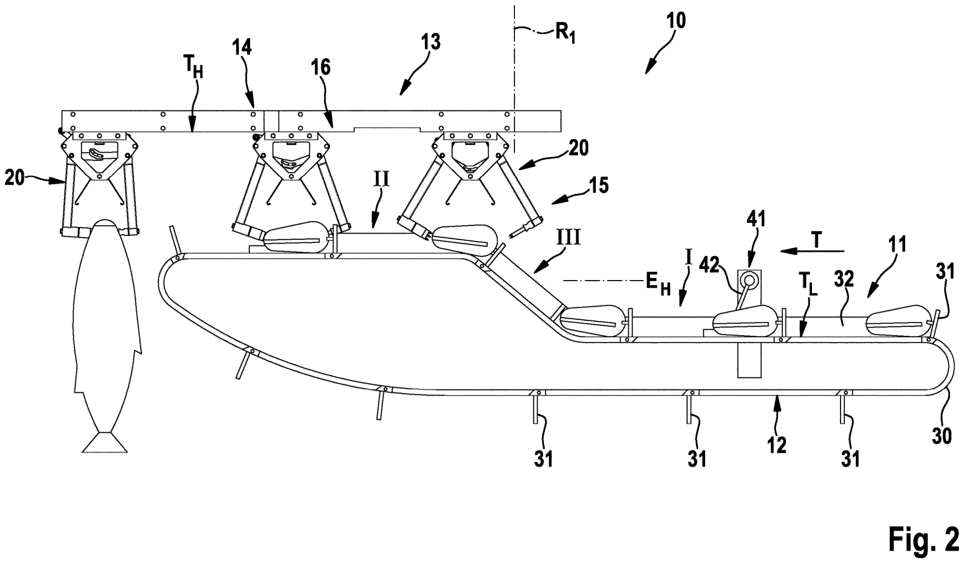

In weiteren Ausführungsformen kann die Hängefördereinrichtung 14 auch als so genannter Karussellförderer (siehe z.B. Figur 2) ausgebildet sein. Das bedeutet, dass das Transportelement 16 mit den daran angeordneten Mitteln 15 zum Abnehmen und Halten der Fische in einer horizontalen Ebene bewegt werden. Die Mittel- und/oder Rotationsachsen R₁ der Umlenk- und/oder Antriebskörper 17 sind dann vertikal gerichtet (siehe z.B. Figur 2).

Das Transportelement 12 der Fördereinrichtung 11 ist zum liegenden Transport der Fische in Transportrichtung T Bauch oder Rücken voraus ausgebildet und eingerichtet und umfasst ein Förderband 30, das quer zur Transportrichtung T verlaufende und sich senkrecht zur Transportebene E_{H} erstreckende und mit dem Förderband 30 umlaufende Stege 31 zur Unterteilung des Förderbandes 30 in einzelne Abschnitte zur Aufnahme jeweils eines einzelnen Fisches aufweist, wobei sich die Stege 31 jeweils nur über einen Teil der Breite des Förderbandes 30 erstrecken. Die Stege 31 sind fest mit dem kettenartigen Förderband 30 verbunden oder einstückig mit diesem ausgebildet und sind mindestens an einer Seite des Förderbandes 30, an der der Kopf der Fische zu platzieren ist, beabstandet zum äußeren Seitenrand des Förderbandes 30 angeordnet. Die Stege 31 können auch sonst unterbrochen und/oder beidseitig mit einem Abstand zum äußeren Seitenrand des Förderbandes 30 ausgebildet sein. Die Stege 31, die auch als Stollen bezeichnet werden, bilden quer zur Transportrichtung T einen Anschlag für die Bauch- oder bevorzugt Rückenseite der Fische.

Vorzugsweise ist dem Förderband 30 in Transportrichtung T mindestens einseitig ein ortsfestes Anschlagelement 32 zum Positionieren jedes Fisches in seiner Längsausrichtung quer zur Transportrichtung T zugeordnet, wobei das Anschlagelement 32 zum Positionieren des Fischkopfes in einer definierten Lage ausgebildet und eingerichtet ist. Das Anschlagelement 32 kann z.B. eine Leiste sein, die oberhalb des Förderbandes 30 gleitend und vorzugsweise berührungslos an einem ortsfesten Rahmen/Gestell 33 der Transportstation 10, an dem auch die Hängefördereinrichtung 14 angeordnet sein kann, befestigt ist, so dass das Förderband 30 unterhalb der Leiste entlang bewegbar ist. Die Leiste erstreckt sich einseitig entlang des Förderbandes 30 mindestens teilweise vom Eintrittsbereich E bis zum Austrittsbereich A und bildet die Anschlagfläche für den Kopf der Fische, so dass die Fische beim manuellen oder automatischen Einlegen mit dem Rücken an einem Steg 31 und mit der Vorderspitze des Mauls am Anschlagelement 32 anliegen. Somit besteht die Möglichkeit, den Fisch in einer definierten Lage auf das Förderband 30 zu legen. Zwischen dem Anschlagelement 32 und den senkrecht dazu ausgerichteten Stegen 31 besteht aufgrund der verkürzten Ausführung der Stege 31 quer zur Transportrichtung T ein Abstand, so dass an dem Seitenrand, an dem das Anschlagelement 32 angeordnet ist, ein Art Korridor gebildet ist, in dem der Kopf vom Eintrittsbereich E zum Austrittsbereich A transportiert wird.

Das Förderband 30, das aus einem Obertrum 34 als Transporttrum und einem Untertrum 35 als Rückführtrum gebildet ist, ist um mindestens drei Umlenk- und/oder Antriebskörper 36, deren Mittel- und/oder Rotationsachsen R₂ horizontal und quer zur Transportrichtung T ausgerichtet sind, geführt. Der Obertrum 34 kann durchgängig horizontal zur Bildung der Transportebene E_{H} ausgerichtet sein. Bevorzugt ist der Obertrum 34 jedoch gestuft ausgebildet. Der Obertrum 34 weist einen ersten Abschnitt I der eine Transportebene E_{H1} aufspannt, und einen zweiten in Transportrichtung T nachlaufenden Abschnitt II, der eine Transportebene E_{H2} aufspannt, auf, wobei die Transportebene E_{H2} oberhalb der Transportebene E_{H1} liegt, so dass die Fische vom Förderband 30 aus der Transportebene E_{H1} über einen Verbindungsabschnitt III ansteigend in die Transportebene E_{H2} transportiert werden. Von den drei Umlenk- und/oder Antriebskörpern 36, beispielsweise Umlenkwalzen oder dergleichen, ist einer der Umlenk- und/oder Antriebskörper 36 im Eintrittsbereich E, ein anderer im Austrittsbereich A und ein dritter zwischen den äußeren Umlenk- und/oder Antriebskörpern 36 etwa im Bereich des oberhalb der Fördereinrichtung 11 liegenden Umlenk- und/oder Antriebskörpers 17 der Hängefördereinrichtung 14 angeordnet. Im Übergangsbereich des Förderbandes 30 aus der Transportebene E_{H1} in die Transportebene E_{H2} ist zu Beginn der Steigung ein Niederhalter 37 als Umlenkelement angeordnet, mittels dem das Förderband 30 quasi in einer definierten Spur gehalten wird. Der Niederhalter 37 greift bevorzugt nur an den äußeren Seitenrändern des Förderbandes 30 von oben an diesem an. Die Transportebene E_{H2} bildet auch den Umsetzbereich für die Fische.

Optional ist das Förderband 30 mindestens im Umsetzbereich höhenverstellbar ausgebildet. Dazu kann beispielsweise der die Transportebene E_{H2} aufspannende Abschnitt II des Förderbandes 30 um eine Schwenkachse C, die horizontal und quer zur Transportrichtung T ausgerichtet ist, mittels eines Antriebs 40 schwenkbar ausgebildet sein. Die Schwenkachse C fällt bevorzugt mit der Mittel- und/oder Rotationsachse R₂ des mittleren Umlenk- und/oder Antriebskörpers 36 des Förderbandes 30 der Fördereinrichtung 11 zusammen. Dazu ist ein Schwenkmechanismus 38 vorgesehen. In der dargestellten Ausführungsform umfasst der Schwenkmechanismus 38 eine Hubstange 39 sowie den Antrieb 40 zum Betätigen der Hubstange 39. Die Hubstange 39 greift im Austrittsbereich A des Transportelementes 12 an, so dass der Abschnitt II um die Schwenkachse C auf und ab schwenkbar ist, um den Abstand des Abschnitts II zum Transportelement 16 der Hängefördereinrichtung 14 und damit zu den Greifmitteln 20 zu variieren.

In einer bevorzugten Ausführungsform umfasst die Transportstation 10 mindestens ein Messmittel 41 zum Aufnehmen und/oder Ermitteln Fischgrößen relevanter Daten, insbesondere zur Bestimmung der Dicke des Kopfes senkrecht zur Transportebene E_{H} und der Breite des Kopfes in der Transportebene E_{H} in Transportrichtung T. Das Messmittel ist im gezeigten Beispiel in Transportrichtung T vor dem Umsetzbereich angeordnet. Das Messmittel 41 kann mechanisch, elektromechanisch, elektronisch, optisch und in jeder anderen Weise, die das Ermitteln, Erkennen, Erfassen, oder Errechnen der Höhe des Kopfes vertikal zur Transportebene E und/oder der Breite des Kopfes horizontal in Transportrichtung T ermöglicht, ausgebildet sein. Bevorzugt ist das Messmittel 41 ortsfest oberhalb der Fördereinrichtung 11 angeordnet und umfasst eine Messfahne 42, die zur Auslenkung durch den Fischkopf ausgebildet und angeordnet ist. Die Messfahne 42 ist quer zur Transportrichtung T mit einem Abstand zum Anschlagelement 32 angeordnet. Mit anderen Worten ragt die Messfahne 42 in den zwischen dem Anschlagelement 32 und den Stegen 31 gebildeten Korridor, so dass die Messfahne 42 durch die entlang des Transportpfads T_{L} transportierten Fische zwangsläufig ausgelenkt wird. Anhand der Auslenkung, beispielsweise mittels eines Winkelgebers, lassen sich die für die Ermittlung der Höhe und Breite des Kopfes notwendigen Informationen sammeln. Der Abstand ist derart gewählt, dass mittels der Messfahne 42 Fische unterschiedlicher Größe detektierbar sind. Die Größe des Abstandes beträgt beispielsweise zwischen 15 und 40mm und besonders bevorzugt etwa 30mm.

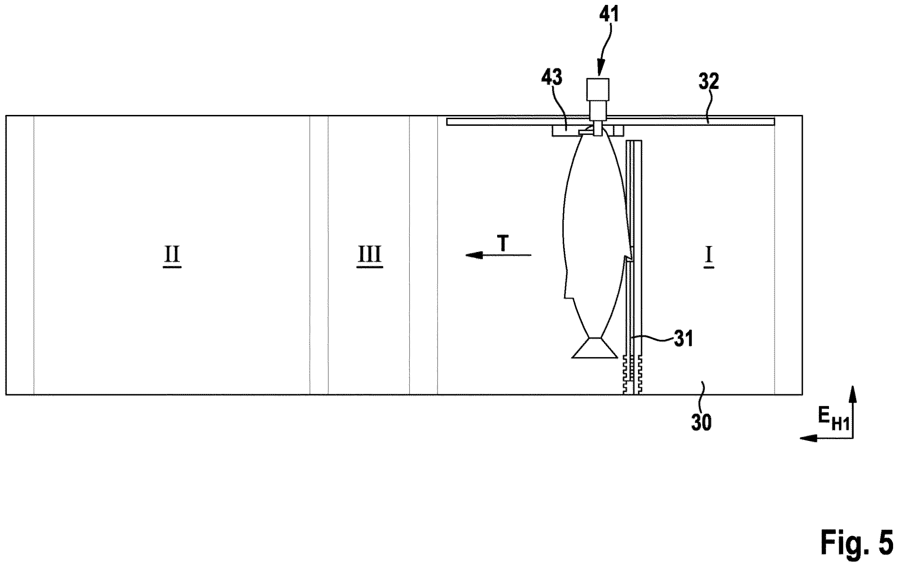

Vorzugsweise ist im Bereich des Messmittels 41, nämlich direkt unterhalb des Messmittels 41, am Anschlagelement 32 ein ortsfestes Auflaufelement 43 angeordnet, das zum Auflaufen des Fisches mit seinem Kopf ausgebildet und eingerichtet ist, derart, dass die dem Messmittel 41 zugewandte obere Gleitfläche des Auflaufelementes 43, die parallel zur Transportebene E_{H1} ausgerichtet ist, die Bezugsebene für das Messmittel 41 bei der Ermittlung der Dicke des Fischkopfes und der Lage der Symmetrieachse des Fischkopfes bildet. Das Auflaufelement 43 sorgt dafür, dass der Fischkopf während der Messung gestützt wird, indem der bedingt durch die anatomischen Verhältnisse des Fisches unterhalb des Fischkopfes existierende Freiraum ausgefüllt wird. Das Messmittel 41 ist in dieser Variante darauf geeicht, den Abstand von der oberen Gleitfläche bis zum höchsten Punkt des Fischkopfes zu ermitteln. Das Auflaufelement 43 ist bevorzugt an dem Anschlagelement 32 lösbar befestigt und weist in Transportrichtung T zunächst einen rampenförmigen Verlauf auf, der in die horizontale Gleitfläche übergeht. Die Unterseite des Auflaufelementes 43 ist parallel zum Förderband 30 ausgerichtet und reibungsarm oder besser reibungsfrei, also bevorzugt mit einem geringen Abstand zum Förderband 30 angeordnet, so dass das Förderband 30 unterhalb des Auflaufelementes 43 entlang bewegbar ist. Ausgehend vom Anschlagelement 32 erstreckt sich das Auflaufelement 43 quer zur Transportrichtung T in Richtung Mitte des Förderbandes, und zwar vorzugsweise in einer Ausdehnung, die dem erwarteten Bereich der Fischköpfe entspricht. In jedem Fall ist die beschriebene Breite des Auflaufelementes 43 in Richtung Mitte des Förderbandes 30 geringer als der Abstand zwischen dem Anschlagelement 32 und den Stegen 31 des Förderbandes 30 (siehe z.B. Figur 5).

Besonders bevorzugt ist Im Umsetzbereich ebenfalls ein Auflaufelement 44, das zum Auflaufen des Fisches mit seinem Kopf ausgebildet und eingerichtet ist, ortsfest am Anschlagelement 32 angeordnet ist, wobei beide Auflaufelemente 43, 44 bezüglich ihrer Höhe ausgehend von der Oberfläche des Förderbandes 30 bis zur oberen Gleitfläche des Auflaufelementes 43, 44 gleich ausgebildet sind, so dass die mittels des Messmittels 41 ermittelte Lage der Symmetrieachse des Fischkopfes im Umsetzbereich reproduzierbar ist. Beide Auflaufelemente 43, 44 sind entsprechend in ihrer Geometrie und ihren Abmessungen gleich ausgebildet und entsprechend zum Anschlagelement 32 und dem Förderband 30 - an unterschiedlichen Positionen entlang des Transportpfads T_{L} - korrespondierend angeordnet.

Besonders bevorzugt umfasst die Transportstation 10 eine Steuereinrichtung 45, wobei der oder jeder Antrieb für das Förderband 30 der Fördereinrichtung 11 und/oder der oder jeder Antrieb 40 für die Höhenverstellung des Förderbandes 30 der Fördereinrichtung 11 und/oder das Messmittel 41 an die Steuereinrichtung 45 angeschlossen sind. Sämtliche Positionier- und Ausrichtschritte der Fische zum optimalen Greifen der Fische in ihrer Symmetrieachse sind dann durch die Fördereinrichtung 11 ausführbar. In den gezeigten Ausführungsformen ist die Hängefördereinrichtung 14 bezüglich ihrer Position entsprechend ortsfest. Mit anderen Worten laufen die Greifmittel 20 stets auf der identischen Bahn entlang. Zur Veränderung des Abstandes zwischen der Transportkette der Hängefördereinrichtung 14 bzw. den Greifmitteln 20 einerseits und dem Förderband 30 der Fördereinrichtung 11 andererseits, insbesondere im Umsetzbereiche, kann optional auch z.B. der Untertrum 18 des Transportelementes 16 höhenverstellbar ausgebildet sein. Es besteht auch die Möglichkeit, dass die Greifmittel 20 in ihrem Abstand zum Förderband 30 einstellbar sind. Dazu können mögliche Stellantriebe, Stellmechanismen, Stellzylinder oder dergleichen ebenso wie die Antriebe für das Transportelement 16 an die Steuereinrichtung 45 angeschlossen sein.

Wie bereits weiter oben erwähnt, ist der Abstand der Messfahne 42 vom Anschlagelement 32 quer zur Transportrichtung T definiert. Vorzugsweise entspricht der Abstand des Messmittels 41 bzw. der Messfahne 42 zum Anschlagelement 32 quer zur Transportrichtung T, also der Messpunkt, an dem die Messfahne 42 auf der Seite des Unterkiefers auf den Fischkopf trifft, dem Abstand der Mittel- und/oder Drehachsen M der Stachelkörper 25, 27 in der Halteposition zum Anschlagelement 32 quer zur Transportrichtung T. Mit anderen Worten sind die Stachelkörper 25, 27 derart am Greifarm 24, 26 angeordnet und ausgerichtet und mit einem Abstand zum Anschlagelement 32 angeordnet, dass der zentrale Stachel 23 des starren Stachelkörpers 25 exakt im Bereich des Messpunktes liegt, wobei das "Finden" der exakten Position des Messpunktes durch die Höhenverstellung des Umsetzbereiches und/oder Geschwindigkeitsanpassungen des Förderbandes 30 mittels der Steuereinrichtung 45 unterstützt wird.

In einer bevorzugten Weiterbildung ist in Transportrichtung T hinter der Fördereinrichtung 11 zum liegenden Fördern der Fische und neben dem Transportpfad T_{H} der Hängefördereinrichtung 14 ein aus der Transportebene E_{H2} im Wesentlichen vertikal nach unten gerichtetes Prallelement 46 angeordnet, dessen Prallfläche in Richtung der hängenden Fische ausgerichtet. Vorzugsweise ist ein einzelnes Prallelement 46, beispielsweise in Form eines einfachen Prallbleches oder eines gegen eine Federkraft gelagerten Prallkörpers, vorgesehen. Die durch das Prallelement 46 bzw. dessen Prallfläche aufgespannte Ebene E_{P} steht etwa parallel zu der durch die Hängefördereinrichtung 14 bzw. deren umlaufende Greifmittel 20 beschriebene vertikale Ebene Eᵥ und etwa senkrecht zu der Transportebene E_{H}, so dass die das Förderband 30 der Fördereinrichtung 11 verlassenden und an der Hängefördereinrichtung 14 hängenden Fische um die Drehachse S abklappen und etwa in der vertikalen Ausrichtung ihrer Symmetrieachse gegen das Prallelement 46 mit der Seitenflanke, mit der sie auf dem Förderband 30 gelegen haben, stoßen.

Anstelle des Messmittels 41 und der Auflaufelemente 43, 44 einerseits und der Höhenverstellung des Förderbandes 30 andererseits zur Positionierung des Fisches kann in einer nicht dargestellten Ausführungsform auch ein Zentriermechanismus zum Einsatz kommen. Dieser Zentriermechanismus umfasst zwei Positionierelemente, die aufeinander zu und voneinander weg bewegbar ausgebildet sind. Die beiden Positionierelemente sind in einer imaginären Ebene, die nicht als mathematische Ebene zu verstehen ist, bewegbar, wobei diese Ebene senkrecht zur Transportebene E_{H} gerichtet ist und sich in Transportrichtung T erstreckt. Die Positionierelemente weisen jeweils eine etwa dreieckförmige bzw. genauer an die Kontur von Fischköpfen angepasste Aussparung auf. Eines der Positionierelemente ist zum Angreifen bauchseitig am Fischkopf und das andere Positionierelement ist zum Angreifen rückenseitig am Fischkopf ausgebildet. Da die beiden Positionierelemente quer zur Transportrichtung T versetzt zueinander angeordnet sind, bilden die Aussparungen durch das Zusammenbewegen der beiden Positionierelemente eine Art Parallelogramm abnehmender Größe, wodurch der Fisch unabhängig von seiner Größe in eine definierte Position gebracht wird. Scharfkantige Einfassungen der Aussparungen bilden zusätzliche eine Positionierhilfe in Längsrichtung der Fische. Sobald der Fisch in der zentrierten Position liegt und fixiert ist, kommt das bereits weiter oben beschriebene Greifmittel 20 zum Einsatz. Die Ausbildung und Funktionalität des Greifmittels 20 ist entsprechend.

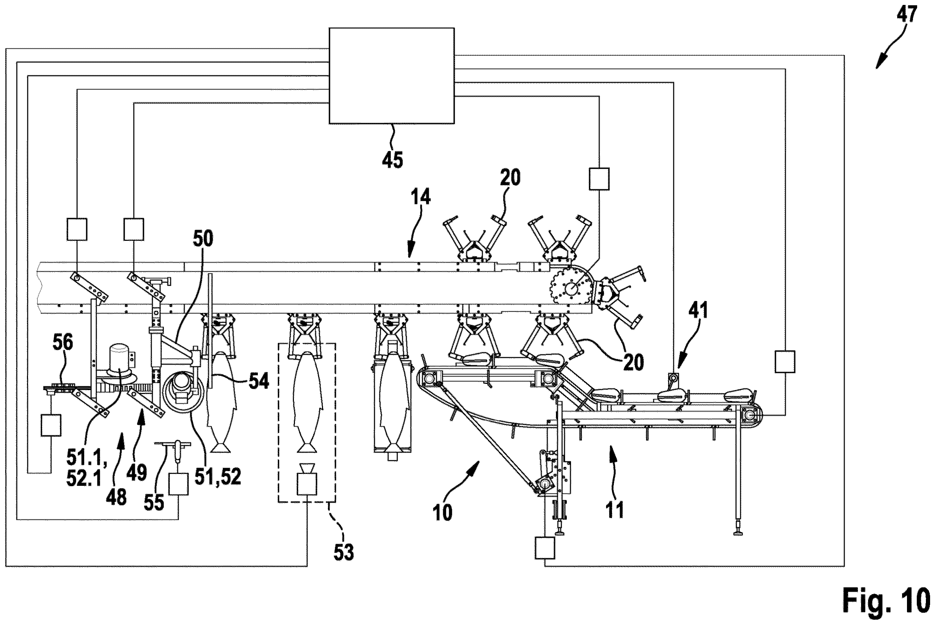

Die Transportstation 10 kann als eigenständiges System, insbesondere auch als Nachrüsteinheit ausgebildet sein. Die Transportstation 10 ist aber bevorzugt Bestandteil einer Fischverarbeitungsmaschine 47 (siehe z.B. Figur 10). Eine solche Fischverarbeitungsmaschine 47 umfasst eine Transportstation 10 zum Transportieren der Fische in den Bereich einer Fischverarbeitungsstation 48 sowie mindestens eine Fischverarbeitungsstation 48. Gemäß der beanspruchten Erfindung ist die Transportstation 10 nach einem oder mehreren der Ansprüche 1 bis 17 ausgebildet und eingerichtet, wobei die oder jede Fischverarbeitungsstation 48 im Bereich der hängenden Position der Fische angeordnet ist. Mit anderen Worten ist die Transportstation 10 in der zuvor ausführlich beschriebenen Weise ausgebildet. Dadurch, dass die Fischverarbeitungsstation 48 im Bereich der hängenden Fische angeordnet ist, sind die Fische beim Erreichen der Fischverarbeitungsstation 48 in ihrer senkrechten Position mit einer vertikal ausgerichteten Symmetrieachse optimal verarbeitbar. Diese Position ist insbesondere für den Köpfschnitt der bereits getöteten Fische von Bedeutung.

Vorzugsweise ist die Fischverarbeitungsmaschine 47 zum Köpfen von ungeschlachteten und/oder geschlachteten und in ihrer Bauchhöhle geöffneten Fischen ausgebildet und eingerichtet, indem eine Fischverarbeitungsstation 48 entlang des Transportpfads T_{H} der Hängefördereinrichtung 14 als Köpfvorrichtung 49 ausgebildet und eingerichtet ist. Diese Köpfvorrichtung 49 umfasst eine Trenneinrichtung 50 zum Trennen des Rumpfes von am Kopf hängenden Fischen, wobei die Trenneinrichtung 50 mindestens ein Paar rotierend antreibbare Kreismesser 51, 52 umfasst und die Kreismesser 51, 52 V-förmig zueinander auf entgegengesetzten Seiten des Transportpfads T_{H} angeordnet sind. Bevorzugt ist ein zweites Paar rotierend antreibbarer Kreismesser 51.1, 52.1 vorgesehen. Vorzugsweise sind die Kreismesser 51, 52, die vorzugsweise zum Ausüben eines so genannten Köpfvorschnitts ausgebildet und eingerichtet sind, in mehreren Freiheitsgraden einstellbar. Die Kreismesser 51.1, 52.1, die vorzugsweise zum endgültigen Abtrennen des Rumpfes vom Kopf ausgebildet und eingerichtet sind, sind mindestens höhenverstellbar ausgebildet.

Bevorzugt ist in Transportrichtung T hinter der Fördereinrichtung 11 und vor der Köpfvorrichtung 49 im Transportpfad T_{H} der Hängefördereinrichtung 14 ein Messmittel 53 zum Erkennen und/oder Ermitteln der Position der Kragenknochen jedes hängenden Fisches angeordnet. Das Messmittel 53 ist in Transportrichtung T noch hinter dem Prallelement 46 angeordnet und zum beidseitigen Abtasten des Fisches, also auf beiden Seitenflanken, ausgebildet und eingerichtet. Dazu umfasst das Messmittel 53 in einer bevorzugten Ausführungsform zwei federbelastete Tastarme, die auf einem gemeinsamen Schlitten oder separaten Schlitten in Transportrichtung T und gleichzeitig schräg nach unten bewegbar ausgebildet sind, derart, dass sie einerseits mitlaufend und andererseits den Fisch von oben nach unten abtastend ausgebildet sind. Dazu ist der oder jeder Schlitten mittels eines Lineartriebs entlang von Schienen aus der oberen Startposition schräg nach unten und zurück antreibbar ausgebildet. In einer weiteren bevorzugten Ausführungsform (siehe z.B. Figur 10) ist das Messmittel 53 als optisches Messmittel ausgebildet. Des Weiteren besteht die Möglichkeit, hinter der Fördereinrichtung 11 und vor der Fischverarbeitungsstation 48 ein Mittel zum Drehen der hängenden Fische vorzugsweise um 90° vorzusehen, derart, dass die hängenden Fische seitlich, also mit der "Backe" voraus, auf die Fischverarbeitungsstation 48 treffen.

Eine Weiterbildung der Fischverarbeitungsmaschine 47 sieht vor, dass in Transportrichtung T hinter der Fördereinrichtung 11 zum liegenden Transport der Fische und vor der Köpfvorrichtung 49 im Transportpfad T_{H} der Hängefördereinrichtung 14 ein Mittel 54 zum Fangen der Brustflossen angeordnet ist. Dieses Mittel 54, das in Transportrichtung hinter dem Mittel 53 angeordnet ist, dient in erster Linie zum Stabilisieren der hängenden Position der Fische sowie zum Freihalten des Schnittbereiches für die Kreismesser 51, 52. Optional kann die Fischverarbeitungsmaschine 47 Transportförderer zum Abtransport der vom Kopf getrennten Rümpfe und/oder zum Abtransport der aus der Klemmung der Greifmittel 20 freigegebenen Köpfe umfassen. Neben der Köpfvorrichtung 49 können weitere Fischverarbeitungsstationen 48 vorgesehen sein. In der Figur 10 sind optional weitere Komponenten dargestellt, wie z.B. ein höhenverstellbares Kreismesser 55 zum Abtrennen der Schwanzflosse. Im Bereich der oder jeder Fischverarbeitungsstation 48 kann weiterhin ein Mittel 56 zum Halten des Fischkörpers insbesondere während des Trennvorgangs angeordnet sein. Dieses Mittel 56 weist optional zwei umlaufend angetriebene Ketten auf, die in Wirkverbindung mit dem Fischkörper bringbar sind. Wie in der Figur 10 angedeutet, können alle Antriebs-, Transport-, Mess- und Verarbeitungskomponenten an die zentrale Steuereinrichtung 45 angeschlossen sein. Es können auch nur einzelne Komponenten an die Steuereinrichtung 45 angeschlossen sein. Optional können auch mehrere separate Steuereinrichtungen vorgesehen sein, die aufeinander abgestimmt sind.

Im Folgenden wird das Verfahren zum Verändern der Lage eines Fisches näher beschrieben. Zunächst werden die Fische vereinzelt auf ein umlaufend angetriebenes Transportelement 12 einer Fördereinrichtung 11 zum liegenden Transport der Fische entlang eines Transportpfads T_{L} gelegt, so dass die Fische entlang des Transportpfads T_{L} von einem Eintrittsbereich E der Fördereinrichtung 11 zu einem Austrittsbereich A der Fördereinrichtung 11 transportiert werden.

Dieses Verfahren zeichnet sich erfindungsgemäß dadurch aus, dass die Fische mittels einer Übernahmeeinrichtung 13 automatisch aus der liegenden Position in eine hängende Position umgesetzt werden, indem die Fische mittels der Übernahmeeinrichtung 13 entlang des Transportpfads T_{L} von der Fördereinrichtung 11 gegriffen und beim Transportieren entlang eines Transportpfads T_{H} in die hängende Position gebracht werden. Die Fische, die bereits beim manuellen oder automatischen Einlegen in ihrer Längserstreckung ausgerichtet auf dem Transportelement 12 positioniert werden, durchlaufen also die Fördereinrichtung 11 entlang des Transportpfads T_{L}, wobei die Fische dann während des Durchlaufs von der Übernahmeeinrichtung 13 gegriffen werden, so dass die Fische beim Weitertransport von dem Transportelement 12 rutschen, allerdings durch die Übernahmeeinrichtung 13 gehalten und entlang des Transportpfads T_{H} weiter transportiert werden. Für die Übernahme verlaufen die beiden Transportpfade T_{L} und T_{H} teilweise parallel und in einer Ebene übereinander, so dass die Übernahmeeinrichtung 13 und die Fördereinrichtung 11 mindestens zeitweise miteinander in Wirkverbindung zueinander kommen können. Einfach ausgedrückt beschreiben die beiden Transportpfade T_{L} und T_{H} abschnittsweise eine identische Strecke, um die Übernahme sicherzustellen.

Die Fische werden bevorzugt Bauch voraus, mit dem Rücken an quer zur Transportrichtung T verlaufenden Stegen 31 eines Förderbandes 30 des Transportelementes 12 und mit dem Kopf an ein dem Förderband 30 zugeordneten Anschlagelement 32 angelegt in Transportrichtung T transportiert. Optional können die Fische auch Rücken voraus transportiert werden, so dass der Bauch am Steg 31 anliegt. Während des Transports in Transportrichtung T durchlaufen die Fische auf dem Transportelement 12 eine Messstation. In einem Abschnitt I des Förderbandes 30 werden Fischgrößen relevante Daten, insbesondere die Dicke des Kopfes senkrecht zu der durch das Förderband 30 aufgespannten Transportebene E_{H} und/oder die Breite des Kopfes in der Transportebene E_{H} in Transportrichtung T, mittels eines Messmittel 41 aufgenommen und/oder ermittelt. Das Aufnehmen und Ermitteln erfasst auch das Bestimmen, Berechnen oder jede andere Art der Auswertung. Die Dicke des Kopfes kann absolut ermittelt werden, also von Seitenwange zu Seitenwange des Fischkopfes, oder ausgehend von einer unteren Bezugsebene, beispielsweise der Oberfläche des Förderbandes 30 oder (siehe weiter unten) einer Oberfläche eines Auflaufelementes 43, bis zum höchsten Punkt des Fischkopfes. Anstelle der Breite des Kopfes von der Außenseite des Unterkiefers bis zur Außenseite des Oberkiefers kann auch der Abstand von der vorauslaufenden Seite des Kopfes, im bevorzugten Beispiel die Außenseite des Unterkiefers, bis zum Steg 31, an dem der Fisch anliegt, ermittelt werden. Wenn die Dicke des Kopfes bekannt ist, kann entsprechend die Lage der Symmetrieachse bzw. Mittellinie des Kopfes ermittelt werden.

Diese Daten/Informationen können bevorzugt gespeichert werden, so dass eine Zuordnung der Daten/Informationen zu jedem Fisch möglich ist. Dazu kann eine Steuereinrichtung 45 einen Speicher aufweisen. Abhängig von den aufgenommenen und/oder ermittelten Messwerten wird das Förderband 30 im Bereich des Greifmittels 20 verfahren. Genauer wird der Fisch in einem Abschnitt II des Förderbandes 30 einem Greifmittel 20 zugeführt, das den Fisch am Kopf greift. Dazu wird die Position des Kopfes senkrecht zum Greifmittel 20 durch eine Höhenverstellung des Abschnittes II des Förderbandes 30 in Abhängigkeit der vom Messmittel 41 aufgenommenen und/oder ermittelten Daten eingestellt. Beispielsweise wird der Abschnitt II um eine Achse geschwenkt, um den Abstand des Förderbandes 30 zum Greifmittel 20 zu verändern, so dass der Fischkopf im Bereich des Greifmittels 20 in der optimalen und zuvor ermittelten Position zum Greifmittel 20 liegt, also in derselben Ebene wie im Bereich des Messmittels 41 liegt. Mit anderen Worten wird der Fisch mit seinem Fischkopf angehoben oder abgesenkt, um mit dem Greifmittel 20 exakt auf die zuvor ermittelte Mittellinie des Fischkopfes zu treffen.

Zum Greifen des Fischkopfes dringt bauchseitig am Unterkiefer und rückenseitig am Oberkiefer jeweils ein Stachelkörper 25, 27 in den Fischkopf ein, indem zwei die Stachelkörper 25, 27 tragenden Greifarme 24, 26 des Greifmittels 20 aus einer Freigabeposition in eine Halteposition bewegt werden. Anstelle der Stachelkörper 25, 27 können auch andere Klemm- oder Halteelemente eingesetzt werden, um den Fisch an seinem Kopf sicher zu fixieren. Nachdem dieses form- und kraftschlüssige Fixieren des Fisches im Umsetzbereich zwischen Hängefördereinrichtung 14 und Fördereinrichtung 11 erfolgt ist, führt das Weitertransportieren des fixierten Fisches in Transportrichtung T, bedingt durch das Umlenken des Förderbandes 30 von dem Obertrum 34 zum Untertrum 35, dazu, dass der Fisch nach unten klappt. Gemäß der beanspruchten Erfindung wird jedes Greifmittel 20 entlang der Hängefördereinrichtung 14 der Übernahmeeinrichtung 13 in einer Ebene Eᵥ, die senkrecht zur Transportebene E_{H} ausgerichtet ist, über den Transportpfad T_{L} der Fördereinrichtung 11 hinaus entlang des Transportpfads T_{H} transportiert, so dass die am Kopf gegriffenen Fische nach dem Verlassen der Fördereinrichtung 11 in die hängende Position schwenken. Das Prallelement 46 kann das Schwenken bzw. Pendeln des Fisches dämpfen.

Um den Fisch jeweils kollisionsfrei und exakt zwischen die sich in Richtung des Förderbandes 30 absenkenden und gespreizten Greifarme 24, 26 zu bringen, werden die Fische beim Transportieren entlang des Transportpfads T_{L} vom Abschnitt I in den Abschnitt II des Förderbandes 30 von unten zwischen den in der Freigabeposition befindlichen Greifarmen 24, 26, die in der vertikalen Ebene Eᵥ von oben in Richtung des Förderbandes 30 bewegt werden, positioniert. Mit anderen Worten kommen die zu fixierenden Fische und die entsprechenden Greifmittel 20 im Umsetzbereich, der im Abschnitt II gebildet ist, derart zusammen, dass die Übernahmeeinrichtung 13 mittels der Greifarme 24, 26 und den daran angeordneten Stachelkörpern 25, 27 mit der Fördereinrichtung 11 bzw. den darauf transportierten Fischen interagieren kann. Die Fische können aber auch horizontal in den Umsetzbereich zugeführt werden. Vorzugsweise sind die Greifarme 24, 26 in diesem Fall noch weiter gespreizt, beispielsweise in eine Winkelstellung von 180°.

Wie erwähnt, kann das Greifen durch Klemmbacken, Spannelemente oder dergleichen erfolgen. Ein besonders sicherer Halt des Fisches wird erreicht, wenn die Greifarme 24, 26, die sich im Umsetzbereich am Untertrum 16 der Hängefördereinrichtung 14 und damit oberhalb des Obertrums 34 der Fördereinrichtung 11 befinden, in der vertikalen Ebene Eᵥ aufeinander zu bewegt werden, so dass ein starrer Stachelkörper 25 mit einem einzelnen Stachel 23 den Kopf des Fisches von der Rückenseite her vollständig durchdringt, während ein zweiter, drehbar gelagerter Stachelkörper 27 mit mindestens zwei Stacheln 29 von der Bauchseite her in den Kopf eindringt. Durch das beidseitige Eindringen bzw. Durchdringen von Stacheln 23, 29 in den Fischkopf wird dieser sicher und positionsgenau/positionstreu gehalten.

Es besteht die Option, dass die Transportgeschwindigkeit des Förderbandes 30 in Abhängigkeit der aufgenommenen und/oder ermittelten Daten, insbesondere der Breite des Kopfes in der Transportebene E_{H} in Transportrichtung T, verändert wird, wenn sich ein Fisch im Bereich des Greifmittels 20 befindet, derart, dass der drehbare Stachelkörper 27 mit den mindestens zwei Stacheln 29 zeitgleich mit dem oder zeitlich vor dem starren Stachelkörper 25 auf den Fischkopf trifft. Vorzugsweise wird die Transportgeschwindigkeit des Förderbandes 30 kurzzeitig reduziert, damit der drehbare Stachelkörper 27 als Gegenlager in den Fischkopf eindringt, bevor der starre Stachelkörper 25 die Schädelplatte des Fischkopfes und weitere Gewebe- und Knochenbestandteile durchstößt. Anschließend wird die Transportgeschwindigkeit wieder auf den vorherigen Wert gesetzt. Optional kann die Transportgeschwindigkeit auch kurzzeitig erhöht werden. Beim vollständigen Durchdringen des Stachels 23 durch den Fischkopf treten erhebliche Kräfte auf, die durch den drehbaren Stachelkörper 27 aufgenommen werden, so dass die ausgerichtete Position des Fisches beim Fixieren erhalten bleibt. Die beiden Stachelkörper 25, 27 können aber auch zeitgleich auf den Fischkopf treffen.

In einer weiteren Ausführungsform kann die Transportgeschwindigkeit des Förderbandes 30 verändert werden, wenn sich ein Fisch im Austrittsbereich A der Fördereinrichtung 11 befindet, derart, dass eine Kollision des Förderbandes 30 bzw. der daran angeordneten Stege 31 mit dem abklappenden Fisch vermieden wird. Vorzugsweise wird die Transportgeschwindigkeit des Förderbandes 30 kurzzeitig reduziert, um dem Fisch das kollisionsfreie Abklappen zu ermöglichen. Da sich z.B. ein weiterer Fisch im Bereich des Greifmittels 20 befindet, während der erste Fisch gerade abgeklappt wird, müssen die Änderungen der Transportgeschwindigkeiten beim Greifen der Fische einerseits und beim Abklappen der Fische andererseits aufeinander abgestimmt werden. Das erfolgt durch die Teilung des Förderbandes 30, also den Abstand der Stege 31 und damit der auf dem Transportelement 12 befindlichen Fische.

Besonders bevorzugt laufen die Fische mit ihrem Fischkopf zum Aufnehmen und/oder Ermitteln der Fischgrößen relevanten Daten auf ein Auflaufelement 43 auf, derart, dass der Fischkopf bezogen auf die Transportebene E_{H} angehoben wird. Während die Fische entlang des Transportpfads T_{L} transportiert werden und die Fischköpfe in dem durch das Anschlagelement 32 und den Stegen 31 gebildeten Korridor entlanggleiten, laufen die Fischköpfe unterhalb des Messmittels 41 über den rampenförmigen Anstieg auf die obere Gleitfläche des Auflaufelementes 43 auf, so dass eine definierte und reproduzierbare Position des Fischkopfes in Bezug auf das Messmittel 41 erreicht wird. Das Messmittel 41 kann nun mechanisch, optisch, elektromechanisch, elektronisch oder in anderer Weise die erforderlichen Daten zum Fischkopf aufnehmen. Wenn das Auflaufelement 43 im Bereich des Messmittels 41 zum Einsatz kommt, erfolgt ein vergleichbares Auflaufen auch im Umsetzbereich, und zwar an der Stelle, an der das Greifmittel 20 den Fisch greift. Hierzu läuft der Fisch mit seinem Kopf im Bereich des Greifmittels 20 ebenfalls auf ein entsprechendes Auflaufelement 44 auf, so dass die Fische mit ihrem Kopf im Bereich des Greifmittels 20 in derselben Ebene liegen wie im Bereich des Messmittels 41.

In der durch die erfindungsgemäße Transportstation 10 optimal ausgerichteten und symmetrischen Position jedes Fisches wird dieser seiner Verarbeitung zugeführt, insbesondere einer Köpfvorrichtung 49. Die Fische werden dazu hängend entlang des Transportpfads TH transportiert. Wenn der symmetrisch ausgerichtete Fisch die Köpfvorrichtung 49 erreicht, wird mittels der V-förmig angeordneten Kreismesser 51, 52 der Rumpf vom Fischkopf getrennt. Der Rumpf wird zur Weiterverarbeitung aufgenommen und weitertransportiert. Die Fischköpfe werden durch Öffnen der Greifarme 24, 26 in die Freigabeposition aus der Fixierung gelöst und ebenfalls gesammelt und zur Weiterverarbeitung oder zum Ausschleusen transportiert.

Vor dem Trennen des Kopfes kann der Fisch entlang des Transportpfads T_{H} noch weiter vermessen werden, beispielsweise durch ein Messmittel 53 zum Erkennen und/oder Ermitteln der Position der Kragenknochen jedes hängenden Fisches. Das Messmittel 53 tastet die äußere Kontur des Fisches zu beiden Seitenflanken ab, um die Position der Kragenknochen zu finden. In Kenntnis der Position der Kragenknochen können die Trennmesser 51, 52 dann noch exakter gesteuert werden. Der Schutzumfang der vorliegenden Erfindung wird durch die angefügten Ansprüche definiert.

## Patentansprüche

1. Transportstation (10), ausgebildet und eingerichtet zum Transportieren von Fischen quer zu ihrer Längserstreckung in Transportrichtung T, umfassend eine Fördereinrichtung (11) zum liegenden Transport vereinzelter Fische entlang eines Transportpfads T_{L} von einem Eintrittsbereich E der Fördereinrichtung (11) zu einem Austrittsbereich A der Fördereinrichtung (11), wobei die Fördereinrichtung (11) ein umlaufend antreibbares Transportelement (12) umfasst, wobei der Fördereinrichtung (11) eine Übernahmeeinrichtung (13) zugeordnet ist, die ausgebildet und eingereicht ist und derart in Wirkverbindung mit der Fördereinrichtung (11) steht, dass die Fische automatisch aus der liegenden Position auf dem Transportpfad T_{L} der Fördereinrichtung (11) in eine hängende Position auf einem Transportpfad T_{H} der Übernahmeeinrichtung (13) umsetzbar sind, **dadurch gekennzeichnet, dass** die Übernahmeeinrichtung (13) eine oberhalb der Fördereinrichtung (11) zum liegenden Transport der Fische angeordnete Hängefördereinrichtung (14) zum hängenden Transport der Fische entlang eines Transportpfades T_{H} und Mittel (15) zum Umsetzen der Fische, nämlich zum Abnehmen der Fische von der Fördereinrichtung (11) zum liegenden Transport der Fische sowie zum Halten der Fische während des hängenden Transports entlang des Transportpfades T_{H} umfasst, wobei die Hängefördereinrichtung (14) in Transportrichtung T über die Fördereinrichtung (11) hinausgeht, wobei im Überlappungsbereich von Fördereinrichtung (11) und Hängefördereinrichtung (14) in Transportrichtung T vor dem Austrittsbereich A der Fördereinrichtung (11) der Umsetzbereich für die Fische von der Fördereinrichtung (11) auf die Hängefördereinrichtung (14) ausgebildet ist, wobei die Hängefördereinrichtung (14) ein umlaufend antreibbares Transportelement (16) umfasst, an dem das Mittel (15) zum Abnehmen und Halten der Fische angeordnet ist, wobei das Mittel (15) mindestens ein Greifmittel (20) zum Greifen des Kopfes eines Fisches umfasst, und wobei das Mittel (15) zum Abnehmen und Halten der Fische mehrere mit dem Transportelement (16) der Hängefördereinrichtung (14) umlaufende Greifmittel (20) umfasst, wobei jedes Greifmittel (20) zwei Greifelemente (21, 22) aufweist, von denen mindestens ein Greifelement (21, 22) mit mindestens einem dem zu greifenden Fisch zugewandten Stachel (23, 29) versehen ist.

2. Transportstation (10) nach Anspruch 1, **dadurch gekennzeichnet, dass** das Transportelement (16) der Hängefördereinrichtung (14) eine um Umlenk- und/oder Antriebskörper (17), deren Mittel- und/oder Rotationsachsen R₁ horizontal und quer zur Transportrichtung T ausgerichtet sind, umlaufend angetriebene Transportkette ist, derart, dass das Mittel (15) zum Abnehmen und Halten der Fische in einer vertikalen Ebene Eᵥ bewegt wird und im Umsetzbereich den geringsten Abstand zum Transportelement (12) der Fördereinrichtung (11) aufweist.

3. Transportstation (10) nach Anspruch 1 oder 2, **dadurch gekennzeichnet, dass** ein erstes Greifelement (21) einen Greifarm (24) mit einem am freien Ende verdrehfest und starr angeordneten Stachelkörper (25) und das zweite Greifelement (22) einen Greifarm (26) mit einem am freien Ende drehbar gelagerten Stachelkörper (27) umfasst, wobei die Greifarme (24, 26) in der vertikalen Ebene Eᵥ automatisch aufeinander zu in eine Halteposition und voneinander weg in eine Freigabeposition und umgekehrt bewegbar ausgebildet und eingerichtet sind und die Mittel- und/oder Drehachsen M der Stachelkörper (25, 27) in der Halteposition horizontal und parallel zur Transportrichtung T ausgerichtet sind.

4. Transportstation (10) nach Anspruch 3, **dadurch gekennzeichnet, dass** ein erster Stachelkörper (25) des ersten Greifelementes (21) einen den Kopf eines Fisches vollständig durchdringenden Stachel (23) aufweist, der in der Halteposition in den zweiten Stachelkörper (27) eintaucht, weshalb der zweite Stachelkörper (27) des zweiten Greifelements (22) eine Öffnung (28) zur Aufnahme des Stachels (23) des ersten Stachelkörpers (25) aufweist, wobei um die Öffnung (28) des zweiten Stachelkörpers (27) herum mindestens zwei in den Kopf eindringende Stacheln (29) angeordnet sind..

5. Transportstation (10) nach Anspruch 4, **dadurch gekennzeichnet, dass** der einzige und zentrale Stachel (23) des ersten Stachelkörpers (25) in der Halteposition die horizontal und parallel zur Transportrichtung T ausgerichtete Schwenkachse S für jeden Fisch bildet.

6. Transportstation (10) nach einem oder mehreren der Ansprüche 1 bis 5, **dadurch gekennzeichnet, dass** das Transportelement (12) zum liegenden Transport der Fische in Transportrichtung T Bauch oder Rücken voraus ausgebildet und eingerichtet ist und ein Förderband (30) umfasst, das quer zur Transportrichtung T verlaufende und sich senkrecht zur Transportebene E_{H} erstreckende und mit dem Förderband (30) umlaufende Stege (31) zur Unterteilung des Förderbandes (30) in einzelne Abschnitte zur Aufnahme jeweils eines einzelnen Fisches aufweist, wobei sich die Stege (31) jeweils nur über einen Teil der Breite des Förderbandes (30) erstrecken.

7. Transportstation (10) nach Anspruch 6, **dadurch gekennzeichnet, dass** dem Förderband (30) in Transportrichtung T mindestens einseitig ein ortsfestes Anschlagelement (32) zum Positionieren jedes Fisches in seiner Längsausrichtung quer zur Transportrichtung T zugeordnet ist, wobei das Anschlagelement (32) zum Positionieren des Fischkopfes in einer definierten Lage ausgebildet und eingerichtet ist.

8. Transportstation (10) nach Anspruch 6 oder 7, **dadurch gekennzeichnet, dass** das Förderband (30), das aus einem Obertrum (34) als Transporttrum und einem Untertrum (35) als Rückführtrum gebildet ist, um mindestens drei Umlenk- und/oder Antriebskörper (36), deren Mittel- und/oder Rotationsachsen R₂ horizontal und quer zur Transportrichtung T ausgerichtet sind, geführt ist und im Bereich des Obertrums (34) einen ersten Abschnitt I, der eine Transportebene E_{H1} aufspannt, und einen zweiten in Transportrichtung T nachlaufenden Abschnitt II, der eine Transportebene E_{H2} aufspannt, aufweist, wobei die Transportebene E_{H2} oberhalb der Transportebene E_{H1} liegt, so dass die Fische vom Förderband (30) aus der Transportebene E_{H1} über einen Verbindungsabschnitt III ansteigend in die Transportebene E_{H2} transportiert werden.

9. Transportstation (10) nach einem oder mehreren der Ansprüche 6 bis 8, **dadurch gekennzeichnet, dass** das Förderband (30) mindestens im Umsetzbereich höhenverstellbar ausgebildet ist.

10. Transportstation (10) nach Anspruch 8 oder 9, **dadurch gekennzeichnet, dass** der die Transportebene E_{H2} aufspannende Abschnitt II des Förderbandes (30) um eine Schwenkachse C, die horizontal und quer zur Transportrichtung T ausgerichtet ist, mittels eines Antriebs (40) schwenkbar ausgebildet ist.

11. Transportstation (10) nach einem oder mehreren der Ansprüche 7 bis 10, **dadurch gekennzeichnet, dass** sie ein Messmittel (41) zum Aufnehmen und/oder Ermitteln Fischgrößen relevanter Daten, insbesondere zur Bestimmung der Dicke des Kopfes senkrecht zur Transportebene E_{H} und der Breite des Kopfes in der Transportebene E_{H} in Transportrichtung T umfasst, wobei das Messmittel (41) in Transportrichtung T vor dem Umsetzbereich angeordnet ist.

12. Transportstation (10) nach Anspruch 11, **dadurch gekennzeichnet, dass** das Messmittel (41) ortsfest oberhalb der Fördereinrichtung (11) angeordnet ist und eine Messfahne (42) umfasst, die zur Auslenkung durch den Fischkopf ausgebildet und angeordnet ist.

13. Transportstation (10) nach Anspruch 11 oder 12, **dadurch gekennzeichnet, dass** im Bereich des Messmittels (41), nämlich direkt unterhalb des Messmittels (41), am Anschlagelement (32) ein ortsfestes Auflaufelement (43) angeordnet ist, das zum Auflaufen des Fisches mit seinem Kopf ausgebildet und eingerichtet ist, derart, dass die dem Messmittel (41) zugewandte obere Gleitfläche des Auflaufelementes (43), die parallel zur Transportebene E_{H1} ausgerichtet ist, die Bezugsebene für das Messmittel (41) bei der Ermittlung der Dicke des Fischkopfes und der Lage der Symmetrieachse des Fischkopfes bildet.

14. Transportstation (10) nach Anspruch 13, **dadurch gekennzeichnet, dass** im Umsetzbereich ebenfalls ein Auflaufelement (44), das zum Auflaufen des Fisches mit seinem Kopf ausgebildet und eingerichtet ist, ortsfest am Anschlagelement (32) angeordnet ist, wobei beide Auflaufelemente (43, 44) bezüglich ihrer Höhe ausgehend von der Oberfläche des Förderbandes (30) bis zur oberen Gleitfläche des Auflaufelementes (43, 44) gleich ausgebildet sind, so dass die mittels des Messmittels (41) ermittelte Lage der Symmetrieachse des Fischkopfes im Umsetzbereich reproduzierbar ist.

15. Transportstation (10) nach einem oder mehreren der Ansprüche 11 bis 14, **dadurch gekennzeichnet, dass** sie eine Steuereinrichtung (45) umfasst, wobei der oder jeder Antrieb für das Förderband (30) der Fördereinrichtung (11) und/oder der oder jeder Antrieb (40) für die Höhenverstellung des Förderbandes (30) der Fördereinrichtung (11) und/oder das Messmittel (41) an die Steuereinrichtung (45) angeschlossen sind.

16. Transportstation (10) nach einem oder mehreren der Ansprüche 11 bis 15, **dadurch gekennzeichnet, dass** der Abstand des Messmittels (41) zum Anschlagelement (32) quer zur Transportrichtung T, also der Messpunkt, dem Abstand der Mittel- und/oder Drehachsen M der Stachelkörper (25, 27) in der Halteposition zum Anschlagelement (32) quer zur Transportrichtung T entspricht.

17. Transportstation (10) nach einem oder mehreren der Ansprüche 1 bis 16, **dadurch gekennzeichnet, dass** in Transportrichtung T hinter der Fördereinrichtung (11) zum liegenden Fördern der Fische und neben dem Transportpfad T_{H} der Hängefördereinrichtung (14) ein aus der Transportebene E_{H2} im Wesentlichen vertikal nach unten gerichtetes Prallelement (46) angeordnet ist, dessen Prallfläche in Richtung der hängenden Fische ausgerichtet ist.

18. Fischverarbeitungsmaschine (47), umfassend eine Transportstation (10) zum Transportieren der Fische in den Bereich einer Fischverarbeitungsstation sowie mindestens eine Fischverarbeitungsstation (48), **dadurch gekennzeichnet, dass** die Transportstation (10) nach einem oder mehreren der Ansprüche 1 bis 17 ausgebildet und eingerichtet ist, wobei die oder jede Fischverarbeitungsstation (48) im Bereich der hängenden Position der Fische angeordnet ist.

19. Fischverarbeitungsmaschine (47) nach Anspruch 18, **dadurch gekennzeichnet, dass** sie zum Köpfen von ungeschlachteten und/oder geschlachteten und in ihrer Bauchhöhle geöffneten Fischen ausgebildet und eingerichtet ist, indem eine Fischverarbeitungsstation (48) entlang des Transportpfads T_{H} der Hängefördereinrichtung (14) als Köpfvorrichtung (49) ausgebildet und eingerichtet ist.

20. Fischverarbeitungsmaschine (47) nach Anspruch 19, **dadurch gekennzeichnet, dass** die Köpfvorrichtung (49) eine Trenneinrichtung (50) zum Trennen des Rumpfes von am Kopf hängenden Fischen umfasst, wobei die Trenneinrichtung (50) ein Paar rotierend antreibbare Kreismesser (51, 52) umfasst und die Kreismesser (51, 52) V-förmig zueinander auf entgegengesetzten Seiten des Transportpfads T_{H} angeordnet sind.

21. Fischverarbeitungsmaschine (47) nach Anspruch 19 oder 20, **dadurch gekennzeichnet, dass** in Transportrichtung T hinter der Fördereinrichtung (11) und vor der Köpfvorrichtung (49) im Transportpfad T_{H} der Hängefördereinrichtung (14) ein Messmittel (53) zum Erkennen und/oder Ermitteln der Position der Kragenknochen jedes hängenden Fisches angeordnet ist.

22. Fischverarbeitungsmaschine (47) nach einem oder mehreren der Ansprüche 19 bis 21, **dadurch gekennzeichnet, dass** in Transportrichtung T hinter der Fördereinrichtung (11) zum liegenden Transport der Fische und vor der Köpfvorrichtung (49) im Transportpfad T_{H} der Hängefördereinrichtung (14) ein Mittel (54) zum Fangen der Brustflossen angeordnet ist.

23. Verfahren zum Transportieren von Fischen quer zu ihrer Längserstreckung in Transportrichtung T, umfassend die Schritte:
- vereinzeltes Einlegen der Fische auf ein umlaufend angetriebenes Transportelement (12) einer Fördereinrichtung (11) zum liegenden Transport der Fische entlang eines Transportpfads T_{L},
- Transportieren der Fische entlang des Transportpfads T_{L} von einem Eintrittsbereich E der Fördereinrichtung (11) zu einem Austrittsbereich A der Fördereinrichtung (11),
wobei die Fische mittels einer Übernahmeeinrichtung (13) automatisch aus der liegenden Position in eine hängende Position umgesetzt werden, indem die Fische mittels der Übernahmeeinrichtung (13) entlang des Transportpfads T_{L} von der Fördereinrichtung (11) gegriffen und beim Transportieren entlang eines Transportpfads T_{H} in die hängende Position gebracht werden, **dadurch gekennzeichnet, dass** jedes Greifmittel (20) entlang einer Hängefördereinrichtung (14) der Übernahmeeinrichtung (13) in einer Ebene Eᵥ, die senkreich zur Transportebene E_{H} ausgerichtet ist, über den Transportpfad T_{L} der Fördereinrichtung (1)) hinaus entlang des Transportpfads T_{H} transportiert wird, so dass die am Kopf gegriffenen Fische nach dem Verlassen der Fördereinrichtung (11) in die hängende Position schwenken.

24. Verfahren nach Anspruch 23, **dadurch gekennzeichnet, dass** der Fisch Bauch voraus, mit dem Rücken an quer zur Transportrichtung T verlaufenden Stegen (31) eines Förderbandes (30) des Transportelementes (12) und mit dem Kopf an ein dem Förderband (30) zugeordneten Anschlagelement (32) angelegt in Transportrichtung T transportiert wird, wobei in einem Abschnitt I des Förderbandes (30) Fischgrößen relevante Daten, insbesondere die Dicke des Kopfes senkrecht zu der durch das Förderband (30) aufgespannten Transportebene E_{H} und/oder die Breite des Kopfes in der Transportebene E_{H} in Transportrichtung T, mittels eines Messmittel (41) aufgenommen und/oder ermittelt wird.

25. Verfahren nach Anspruch 24, **dadurch gekennzeichnet, dass** anhand der Dicke des Kopfes die Lage der Symmetrieachse des Kopfes ermittelt wird.

26. Verfahren nach Anspruch 24 oder 25, **dadurch gekennzeichnet, dass** der Fisch in einem Abschnitt II des Förderbandes (30) einem Greifmittel (20) zugeführt wird, das den Fisch am Kopf greift, wobei die Position des Kopfes senkrecht zum Greifmittel (20) durch eine Höhenverstellung des Abschnittes II des Förderbandes (30) in Abhängigkeit der vom Messmittel (41) aufgenommenen und/oder ermittelten Daten eingestellt wird, so dass der Fischkopf im Bereich des Greifmittels (20) in derselben Ebene liegt wie im Bereich des Messmittels (41).

27. Verfahren nach einem oder mehreren der Ansprüche 23 bis 26, **dadurch gekennzeichnet, dass** zum Greifen des Fischkopfes bauchseitig am Unterkiefer und rückenseitig am Oberkiefer jeweils ein Stachelkörper (25, 27) in den Fischkopf eindringt, indem zwei die Stachelkörper (25, 27) tragenden Greifarme (24, 26) des Greifmittels (20) aus einer Freigabeposition in eine Halteposition bewegt werden.

28. Verfahren nach Anspruch 27, **dadurch gekennzeichnet, dass** die Fische beim Transportieren entlang des Transportpfads T_{L} vom Abschnitt I in den Abschnitt II des Förderbandes (30) von unten zwischen den in der Freigabeposition befindlichen Greifarmen (24, 26), die in der vertikalen Ebene Eᵥ von oben in Richtung des Förderbandes (30) bewegt werden, positioniert werden.

29. Verfahren nach Anspruch 27 oder 28, **dadurch gekennzeichnet, dass** die Greifarme in der vertikalen Ebene E_{V} aufeinander zu bewegt werden, so dass ein starrer Stachelkörper (25) mit einem einzelnen Stachel (23) den Kopf des Fisches von der Rückenseite her vollständig durchdringt, während ein zweiter, drehbar gelagerter Stachelkörper (27) mit mindestens zwei Stacheln (29) von der Bauchseite her in den Kopf eindringt.

30. Verfahren nach Anspruch 29, **dadurch gekennzeichnet, dass** die Transportgeschwindigkeit des Förderbandes (30) in Abhängigkeit der aufgenommenen und/oder ermittelten Daten, insbesondere der Breite des Kopfes in der Transportebene E_{H} in Transportrichtung T, verändert wird, wenn sich ein Fisch im Bereich des Greifmittels (20) befindet, derart, dass der drehbare Stachelkörper (27) mit den mindestens zwei Stacheln (29) zeitgleich mit dem oder zeitlich vor dem starren Stachelkörper (25) auf den Fischkopf trifft.

31. Verfahren nach Anspruch 30, **dadurch gekennzeichnet, dass** die Transportgeschwindigkeit des Förderbandes (30) verändert wird, wenn sich ein Fisch im Austrittsbereich A der Fördereinrichtung (11) befindet, derart, dass eine Kollision des Förderbandes (30) bzw. der daran angeordneten Stege (31) mit dem abklappenden Fisch vermieden wird, wobei die Änderungen der Transportgeschwindigkeiten beim Greifen der Fische einerseits und beim Abklappen der Fische andererseits durch die Teilung des Förderbandes (30) aufeinander abgestimmt sind.

32. Verfahren nach einem oder mehreren der Ansprüche 24 bis 31, **dadurch gekennzeichnet, dass** die Fische mit ihrem Fischkopf zum Aufnehmen und/oder Ermitteln der Fischgrößen relevanten Daten auf ein Auflaufelement (43) auflaufen, derart, dass der Fischkopf bezogen auf die Transportebene E_{H} angehoben wird.

33. Verfahren nach Anspruch 32, **dadurch gekennzeichnet, dass** die Fische im Bereich des Greifmittels (20) ebenfalls auf ein entsprechendes Auflaufelement (44) auflaufen, so dass die Fische mit ihrem Kopf im Bereich des Greifmittels (20) in derselben Ebene liegen wie im Bereich des Messmittels (41).

## Claims

1. Transporting station (10), designed and configured for transporting fish transverse to their longitudinal extent in a transport direction T, comprising a conveying device (11) for transporting individual, separated fish in a lying position along a transport path T_{L} from an entry region E of the conveying device (11) to an exit region A of the conveying device (11), wherein the conveying device (11) comprises a rotationally driven transport element (12), wherein the conveying device (11) is assigned a change-over device (13) which is designed and configured and is in operative connection with the conveying device (11), in such a manner that the fish can be transferred automatically from the lying position on the transport path T_{L} of the conveying device (11) into a suspended position on a transport path T_{H} of the change-over device (13), **characterised in that** the change-over device (13) comprises a suspended conveying device (14), arranged above the conveying device (11) for transport of the fish in a lying position, for transporting the fish suspended along a transport path T_{H} and means (15) for transferring the fish, namely for removing the fish from the conveying device (11) for transport of the fish in a lying position and for holding the fish during suspended transport along the transport path T_{H} wherein the suspended conveying device (14) extends beyond the conveying device (11) in transport direction T, wherein the change-over area for the fish from the conveying device (11) to the suspended conveying device (14) is formed in the overlapping region of the conveying device (11) and the suspended conveying device (14) in transport direction T upstream of the exit region A of the conveying device (11), wherein the suspended conveying device (14) comprises a rotationally driven transport element (16) on which the means (15) for removing and holding the fish is arranged, wherein the means (15) comprises at least one gripping means (20) for gripping the head of a fish and wherein the means (15) for removing and holding the fish comprises a plurality of gripping means (20) rotating with the transport element (16) of the suspended conveying device (14), wherein each gripping means (20) has two gripping elements (21, 22), of which at least one gripping element (21, 22) is provided with at least one spike (23, 29) directed towards the fish to be gripped.

2. Transporting station (10) according to claim 1, **characterised in that** the transport element (16) of the suspended conveying device (14) is a transport chain rotationally driven about a deflecting and/or drive body (17), whose central and/or rotational axes R₁ are oriented horizontal and transverse to the transport direction T, in such a manner that the means (15) for removing and holding the fish is moved in a vertical plane Eᵥ and has the smallest distance to the transport element (12) of the conveying device (11) in the change-over area.

3. Transporting station (10) according to claim 1 or 2, **characterised in that** a first gripping element (21) comprises a gripping arm (24) with a torsionally fixed and rigid spike body (25) arranged on the free end and the second gripping element (22) comprises a gripping arm (26) with a rotatably supported spike body (27) arranged on the free end, wherein the gripping arms (24, 26) are designed and configured to be automatically movable towards each other into a holding position and away from each other into a release position and vice versa in the vertical plane E_{V} and in the horizontal position the central and/or rotational axes M of the spike bodies (25, 27) are oriented horizontally and parallel to the transport direction T.

4. Transporting station (10) according to claim 3, **characterised in that** a first spike body (25) of the first gripping element (21) has a spike (23) completely penetrating the head of a fish, said spike entering the second spike body (27) in the holding position, which is why the second spike body (27) of the second gripping element (22) has an opening (28) for receiving the spike (23) of the first spike body (25), wherein at least two spikes (29) penetrating the head are arranged around the opening (28) of the second spike body (27).

5. Transporting station (10) according to claim 4, **characterised in that**, in the holding position, the only and central spike (23) of the first spike body (25) forms the pivot axis S oriented horizontally and parallel to the transport direction T for each fish.

6. Transporting station (10) according to one or more of claims 1 to 5, **characterised in that** the transport element (12) is designed and configured for lying transport of the fish abdomen- or spine-first in transport direction T and comprises a conveyor belt (30) which has webs (31) running transverse to the transport direction T and extending perpendicular to the transport plane E_{H} and rotating with the conveyor belt (30) for subdividing said conveyor belt (30) into individual sections for each receiving a single fish, wherein the webs (31) only extend in each case over part of the width of the conveyor belt (30).

7. Transporting station (10) according to claim 6, **characterised in that** on at least one side in transport direction T a fixed abutment element (32) for positioning each fish in its longitudinal orientation transverse to the transport direction T is assigned to the conveyor belt (30), wherein the abutment element (32) is designed and configured for positioning the fish head in a defined position.

8. Transporting station (10) according to claim 6 or 7, **characterised in that** the conveyor belt (30), which is formed from an upper run (34) as transport run and a lower run (35) as return run, is guided about at least three deflecting and/or drive bodies (36), whose central and/or rotational axes R₂ are oriented horizontal and transverse to the transport direction T, and in the region of the upper run (34) said conveyor belt has a first section I which spans a transport plane E_{H1} and a second section II following in transport direction T which spans a transport plane E_{H2}, wherein the transport plane E_{H2} is situated above the transport plane E_{H1} such that the fish are transported by the conveyor belt (30) on an incline from the transport plane E_{H1} to the transport plane E_{H2} via a connecting section III.

9. Transporting station (10) according to one or more of claims 6 to 8, **characterised in that** the conveyor belt (30) is designed to be height-adjustable at least in the change-over area.

10. Transporting station (10) according to claim 8 or 9, **characterised in that** the section II of the conveyor belt (30) spanning the transport plane E_{H2} is designed to be pivotable by means of a drive (40) about a pivot axis C which is oriented horizontal and transverse to the transport direction T.

11. Transporting station (10) according to one or more of claims 7 to 10, **characterised in that** it comprises a measuring means (41) for recording and/or determining fish-size-relevant data, in particular for determining the thickness of the head perpendicular to the transport plane E_{H} and the width of the head in the transport plane E_{H} in transport direction T, wherein the measuring means (41) is arranged upstream of the change-over area in transport direction T.

12. Transporting station (10) according to claim 11, **characterised in that** the measuring means (41) is arranged fixedly above the conveying device (11) and comprises a measuring vane (42) which is designed and arranged for deflection by the fish head.

13. Transporting station (10) according to claim 11 or 12, **characterised in that** in the region of the measuring means (41), namely directly below the measuring means (41), arranged on the abutment element (32) is a fixed take-up element (43) which is designed and configured to take up the fish with its head, in such a manner that the upper sliding surface of the take-up element (43) directed towards the measuring means (41), which is oriented parallel to the transport plane E_{H1}, forms the reference plane for the measuring means (41) when determining the thickness of the fish head and the position of the axis of symmetry of the fish head.

14. Transporting station (10) according to claim 13, **characterised in that** a take-up element (44), which is designed and configured to take up the fish with its head, is also arranged fixedly on the abutment element (32) in the change-over area, wherein the two take-up elements (43, 44) are identically designed in respect of their height starting from the surface of the conveyor belt (30) up to the upper sliding surface of the take-up element (43, 44), such that the position of the axis of symmetry of the fish head determined by the measuring means (41) is reproducible in the change-over area.

15. Transporting station (10) according to one or more of claims 11 to 14, **characterised in that** it comprises a control device (45), wherein the or each drive for the conveyor belt (30) of the conveying device (11) and/or the or each drive (40) for the height adjustment of the conveyor belt (30) of the conveying device (11) and/or the measuring means (41) are connected to the control device (45).

16. Transporting station (10) according to one or more of claims 11 to 15, **characterised in that** the distance of the measuring means (41) from the abutment element (32) transverse to the transport direction T, i.e. the measuring point, corresponds to the distance of the central and/or rotational axes M of the spike bodies (25, 27) in the holding position from the abutment element (32) transverse to the transport direction T.

17. Transporting station (10) according to one or more of claims 1 to 16, **characterised in that** an impact element (46), directed substantially vertically downwards from the transport plane E_{H2}, whose impact surface is oriented in the direction of the suspended fish, is arranged in transport direction T, downstream of the conveying device (11) for transport of the fish in a lying position and alongside the transport path T_{H} of the suspended conveying device (14).

18. Fish processing machine (47), comprising a transporting station (10) for transporting the fish in the region of a fish processing station and at least one fish processing station (48), **characterised in that** the transporting station (10) is designed and configured according to one or more of claims 1 to 17, wherein the or each fish processing station (48) is arranged in the region of the suspended position of the fish.

19. Fish processing machine (47) according to claim 18, **characterised in that** it is designed and configured for heading unslaughtered and/or slaughtered fish with opened abdominal cavities, **in that** a fish processing station (48) along the transport path T_{H} of the suspended conveying device (14) is designed and configured as a heading apparatus (49).

20. Fish processing machine (47) according to claim 19, **characterised in that** the heading apparatus (49) comprises a separating device (50) for separating the body of fish suspended by the head, wherein the separating device (50) comprises a pair of rotatably drivable circular knives (51, 52) and the circular knives (51, 52) are arranged in a V-shape to each other on opposing sides of the transport path T_{H}.

21. Fish processing machine (47) according to claim 19 or 20, **characterised in that** a measuring means (53) for detecting and/or determining the position of the collar bones of each suspended fish is arranged in transport direction T downstream of the conveying device (11) and upstream of the heading apparatus (49) in the transport path T_{H} of the suspended conveying device (14).

22. Fish processing machine (47) according to one or more of claims 19 to 21, **characterised in that** a means (54) for capturing the pectoral fins is arranged in transport direction T downstream of the conveying device (11) for transport of the fish in a lying position and upstream of the heading apparatus (49) in the transport path T_{H} of the suspended conveying device (14).

23. Method for transporting fish transverse to their longitudinal extent in transport direction T, comprising the steps:
- individually placing the fish on a rotationally driven transport element (12) of a conveying device (11) for transporting the fish in a lying position along a transport path T_{L},
- transporting the fish along the transport path T_{L} from an entry region E of the conveying device (11) to an exit region A of the conveying device (11),
wherein the fish are transferred automatically from the lying position to a suspended position by means of the change-over device (13), in that the fish are picked up from the conveying device (11) using the change-over device (13) along the transport path T_{L} and are brought into the suspended position while being transported along a transport path T_{H}, **characterised in that** each gripping means (20) along a suspended conveying device (14) of the change-over device (13) in a plane Ev, which is oriented perpendicular to the transport plane E_{H}, is transported beyond the transport path T_{L} of the conveying device (11) along the transport path T_{H}, such that the fish gripped by the head pivot into the suspended position after leaving the conveying device (11).

24. Method according to claim 23, **characterised in that** the fish is transported abdomen-first in transport direction T, with the spine on webs (31) extending transverse to the transport direction T of a conveyor belt (30) of the transport element (12) and with the head resting on an abutment element (32) assigned to the conveyor belt (30), wherein fish-size-relevant data, in particular the thickness of the head perpendicular to the transport plane E_{H} spanned by the conveyor belt (30) and/or the width of the head in the transport plane E_{H} in transport direction T are recorded and/or determined in a section I of the conveyor belt (30) by a measuring means (41).

25. Method according to claim 24, **characterised in that** the position of the axis of symmetry of the head is determined based on the thickness of the head.

26. Method according to claim 24 or 25, **characterised in that** the fish is fed in a section II of the conveyor belt (30) to a gripping means (20) which grips the fish by the head, wherein the position of the head perpendicular to the gripping means (20) is adjusted by a height adjustment of the section II of the conveyor belt (30) dependent on the data recorded and/or determined by the measuring means (41), such that in the region of the gripping means (20) the fish head is located in the same plane as in the region of the measuring means (41).

27. Method according to one or more of claims 23 to 26, **characterised in that** for gripping the fish head by the lower jaw on the ventral side and by the upper jaw on the dorsal side, one spike body (25, 27) in each case penetrates the fish head, by moving the two gripping arms (24, 26) of the gripping means (20) bearing the spike bodies (25, 27) from a release position into a holding position.

28. Method according to claim 27, **characterised in that**, during transportation along the transport path T_{L} from section I to section II of the conveyor belt (30), the fish are positioned from below between the gripping arms (24, 26) located in the release position, said gripping arms being moved from above in the vertical plane E_{V} in the direction of the conveyor belt (30).

29. Method according to claim 27 or 28, **characterised in that** the gripping arms are moved towards each other in the vertical plane E_{V} such that a rigid spike body (25) with a single spike (23) completely penetrates through the head of the fish from the dorsal side, while a second, rotatably supported spike body (27) with at least two spikes (29) penetrates into the head from the ventral side.

30. Method according to claim 29, **characterised in that** the transport speed of the conveyor belt (30) is varied dependent on the recorded and/or determined data, in particular the width of the head in the transport plane E_{H} in transport direction T, when a fish is located in the region of the gripping means (20) in such a way that the rotatable spike body (27) with the at least two spikes (29) meets the fish head at the same time as or chronologically before the rigid spike body (25).

31. Method according to claim 30, **characterised in that** the transport speed of the conveyor belt (30) is varied when a fish is located in the exit region A of the conveying device (11) in such a way that the conveyor belt (30) or the webs (31) arranged thereon are prevented from colliding with the swinging fish, wherein the changes in the transport speed are coordinated with each other on gripping of the fish on the one hand, and on swinging down of the fish on the other hand, by the partitioning of the conveyor belt (30).

32. Method according to one or more of claims 24 to 31, **characterised in that** the fish run with their fish head onto a take-up element (43) for recording and/or determining the fish-size-relevant data in such a way that the fish head is raised in relation to the transport plane E_{H}.

33. Method according to claim 32, **characterised in that** the fish in the region of the gripping means (20) also run onto a corresponding take-up element (44) such that the fish lie with their head in the same plane in the region of the gripping means (20) as in the region of the measuring means (41).

## Revendications

1. Station de transport (10), configurée et adaptée pour transporter des poissons transversalement à leur extension longitudinale dans une direction de transport T, comprenant un appareil de convoyage (11) pour le transport couché de poissons individuels le long d'un trajet de transport T_{L} d'une zone d'entrée E de l'appareil de convoyage (11) à une zone de sortie A de l'appareil de convoyage (11), l'appareil de convoyage (11) comprenant un élément de transport (12) pouvant être entraîné en rotation, un appareil de reprise (13) étant associé à l'appareil de convoyage (11), qui est configuré et adapté et qui est en liaison active avec l'appareil de convoyage (11) de telle sorte que les poissons peuvent être transférés automatiquement de la position couchée sur le trajet de transport T_{L} de l'appareil de convoyage (11) à une position suspendue sur un trajet de transport T_{H} de l'appareil de reprise (13), **caractérisée en ce que** l'appareil de reprise (13) comprend un appareil de convoyage suspendu (14) agencé au-dessus de l'appareil de convoyage (11) pour le transport couché des poissons, pour le transport suspendu des poissons le long d'un trajet de transport T_{H}, et des moyens (15) pour transférer les poissons, à savoir pour enlever les poissons de l'appareil de convoyage (11) pour le transport couché des poissons ainsi que pour maintenir les poissons pendant le transport suspendu le long du trajet de transport T_{H}, l'appareil de convoyage suspendu (14) dépassant l'appareil de convoyage (11) dans la direction de transport T, la zone de transfert pour les poissons de l'appareil de convoyage (11) à l'appareil de convoyage suspendu (14) étant configurée dans la zone de chevauchement de l'appareil de convoyage (11) et de l'appareil de convoyage suspendu (14) dans la direction de transport T avant la zone de sortie A de l'appareil de convoyage (11), l'appareil de convoyage suspendu (14) comprenant un élément de transport (16) pouvant être entraîné en rotation, sur lequel est agencé le moyen (15) pour enlever et maintenir les poissons, le moyen (15) comprenant au moins un moyen de préhension (20) pour saisir la tête d'un poisson, et le moyen (15) pour enlever et maintenir les poissons comprenant plusieurs moyens de préhension (20) tournant avec l'élément de transport (16) de l'appareil de convoyage suspendu (14), chaque moyen de préhension (20) présentant deux éléments de préhension (21, 22), dont au moins un élément de préhension (21, 22) est pourvu d'au moins un aiguillon (23, 29) tourné vers le poisson à saisir.

2. Station de transport (10) selon la revendication 1, **caractérisée en ce que** l'élément de transport (16) de l'appareil de convoyage suspendu (14) est une chaîne de transport entraînée en rotation autour de corps de renvoi et/ou d'entraînement (17) dont les axes centraux et/ou de rotation R₁ sont orientés horizontalement et transversalement à la direction de transport T, de telle sorte que le moyen (15) pour enlever et maintenir les poissons est déplacé dans un plan vertical E_{V} et présente dans la zone de transfert la distance la plus faible par rapport à l'élément de transport (12) de l'appareil de convoyage (11).

3. Station de transport (10) selon la revendication 1 ou 2, **caractérisée en ce qu'**un premier élément de préhension (21) comprend un bras de préhension (24) avec un corps d'aiguillon (25) agencé de manière fixe en rotation et rigide à l'extrémité libre et le deuxième élément de préhension (22) comprend un bras de préhension (26) avec un corps d'aiguillon (27) monté de manière rotative à l'extrémité libre, les bras de préhension (24, 26) étant configurés et adaptés de manière à pouvoir se déplacer automatiquement l'un vers l'autre dans le plan vertical Ev dans une position de maintien et à s'éloigner l'un de l'autre dans une position de libération et inversement, et les axes centraux et/ou de rotation M des corps d'aiguillon (25, 27) étant orientés horizontalement et parallèlement à la direction de transport T dans la position de maintien.

4. Station de transport (10) selon la revendication 3, **caractérisée en ce qu'**un premier corps d'aiguillon (25) du premier élément de préhension (21) présente un aiguillon (23) traversant complètement la tête d'un poisson, qui plonge dans le deuxième corps d'aiguillon (27) dans la position de maintien, ce pourquoi le deuxième corps d'aiguillon (27) du deuxième élément de préhension (22) présente une ouverture (28) pour recevoir l'aiguillon (23) du premier corps d'aiguillon (25), au moins deux aiguillons (29) pénétrant dans la tête étant agencés autour de l'ouverture (28) du deuxième corps d'aiguillon (27).

5. Station de transport (10) selon la revendication 4, **caractérisée en ce que** l'aiguillon unique et central (23) du premier corps d'aiguillon (25) forme, dans la position de maintien, l'axe de pivotement S orienté horizontalement et parallèlement à la direction de transport T pour chaque poisson.

6. Station de transport (10) selon une ou plusieurs des revendications 1 à 5, **caractérisée en ce que** l'élément de transport (12) est configuré et adapté pour le transport couché des poissons dans la direction de transport T le ventre ou le dos en avant et comprend une bande de convoyage (30), qui présente des entretoises (31) s'étendant transversalement à la direction de transport T et perpendiculairement au plan de transport E_{H} et tournant avec la bande de convoyage (30) pour diviser la bande de convoyage (30) en sections individuelles pour recevoir chacune un poisson individuel, les entretoises (31) ne s'étendant chacune que sur une partie de la largeur de la bande de convoyage (30).

7. Station de transport (10) selon la revendication 6, **caractérisée en ce qu'**un élément de butée (32) fixe est associé à la bande de convoyage (30) dans la direction de transport T, au moins d'un côté, pour positionner chaque poisson dans son orientation longitudinale transversalement à la direction de transport T, l'élément de butée (32) étant configuré et adapté pour positionner la tête du poisson dans une position définie.

8. Station de transport (10) selon la revendication 6 ou 7, **caractérisée en ce que** la bande de convoyage (30), qui est formée d'un brin supérieur (34) en tant que brin de transport et d'un brin inférieur (35) en tant que brin de retour, est guidée autour d'au moins trois corps de renvoi et/ou d'entraînement (36), dont les axes centraux et/ou de rotation R₂ sont orientés horizontalement et transversalement à la direction de transport T, et présente dans la zone du brin supérieur (34) une première section I, qui définit un plan de transport E_{H1}, et une deuxième section II suivante dans la direction de transport T, qui définit un plan de transport E_{H2}, le plan de transport E_{H2} étant situé au-dessus du plan de transport E_{H1}, de telle sorte que les poissons sont transportés par la bande de convoyage (30) depuis le plan de transport E_{H1} en montant dans le plan de transport E_{H2} via une section de liaison III.

9. Station de transport (10) selon une ou plusieurs des revendications 6 à 8, **caractérisée en ce que** la bande de convoyage (30) est configurée pour être réglable en hauteur au moins dans la zone de transfert.

10. Station de transport (10) selon la revendication 8 ou 9, **caractérisée en ce que** la section Il de la bande de convoyage (30), qui définit le plan de transport E_{H2}, est configurée pour pouvoir pivoter autour d'un axe de pivotement C, qui est orienté horizontalement et transversalement à la direction de transport T, au moyen d'un entraînement (40).

11. Station de transport (10) selon une ou plusieurs des revendications 7 à 10, **caractérisée en ce qu'**elle comprend un moyen de mesure (41) pour enregistrer et/ou déterminer des données pertinentes pour la taille des poissons, notamment pour déterminer l'épaisseur de la tête perpendiculairement au plan de transport E_{H} et la largeur de la tête dans le plan de transport E_{H} dans la direction de transport T, le moyen de mesure (41) étant agencé avant la zone de transfert dans la direction de transport T.

12. Station de transport (10) selon la revendication 11, **caractérisée en ce que** le moyen de mesure (41) est agencé de manière fixe au-dessus de l'appareil de convoyage (11) et comprend un drapeau de mesure (42) qui est configuré et agencé pour être dévié par la tête du poisson.

13. Station de transport (10) selon la revendication 11 ou 12, **caractérisée en ce que** dans la zone du moyen de mesure (41), à savoir directement en dessous du moyen de mesure (41), un élément d'arrivée (43) fixe est agencé sur l'élément de butée (32), lequel est configuré et adapté pour l'arrivée du poisson avec sa tête, de telle sorte que la surface de glissement supérieure de l'élément d'arrivée (43), tournée vers le moyen de mesure (41), qui est orientée parallèlement au plan de transport E_{H1}, forme le plan de référence pour le moyen de mesure (41) lors de la détermination de l'épaisseur de la tête du poisson et de la position de l'axe de symétrie de la tête du poisson.

14. Station de transport (10) selon la revendication 13, **caractérisée en ce que**, dans la zone de transfert, un élément d'arrivée (44), qui est configuré et adapté pour l'arrivée du poisson avec sa tête, est également agencé de manière fixe sur l'élément de butée (32), les deux éléments d'arrivée (43, 44) étant configurés de manière identique en ce qui concerne leur hauteur, en partant de la surface de la bande de convoyage (30) jusqu'à la surface de glissement supérieure de l'élément d'arrivée (43, 44), de telle sorte que la position de l'axe de symétrie de la tête du poisson, déterminée au moyen du moyen de mesure (41), peut être reproduite dans la zone de transfert.

15. Station de transport (10) selon une ou plusieurs des revendications 11 à 14, **caractérisée en ce qu'**elle comprend un appareil de commande (45), le ou chaque entraînement pour la bande de convoyage (30) de l'appareil de convoyage (11) et/ou le ou chaque entraînement (40) pour le réglage en hauteur de la bande de convoyage (30) de l'appareil de convoyage (11) et/ou le moyen de mesure (41) étant raccordés à l'appareil de commande (45).

16. Station de transport (10) selon une ou plusieurs des revendications 11 à 15, **caractérisée en ce que** la distance du moyen de mesure (41) à l'élément de butée (32) transversalement à la direction de transport T, c'est-à-dire le point de mesure, correspond à la distance des axes centraux et/ou de rotation M des corps d'aiguillon (25, 27) dans la position de maintien à l'élément de butée (32) transversalement à la direction de transport T.

17. Station de transport (10) selon une ou plusieurs des revendications 1 à 16, **caractérisée en ce que**, dans la direction de transport T, un élément déflecteur (46) dirigé vers le bas essentiellement verticalement à partir du plan de transport E_{H2}, dont la surface déflectrice est orientée en direction des poissons suspendus, est agencé après l'appareil de convoyage (11) pour le transport couché des poissons et à côté du trajet de transport T_{H} de l'appareil de convoyage suspendu (14).

18. Machine de traitement de poissons (47), comprenant une station de transport (10) pour transporter les poissons dans la zone d'une station de traitement de poissons, ainsi qu'au moins une station de traitement de poissons (48), **caractérisée en ce que** la station de transport (10) est configurée et adaptée selon une ou plusieurs des revendications 1 à 17, la ou chaque station de traitement de poissons (48) étant agencée dans la zone de la position suspendue des poissons.

19. Machine de traitement de poissons (47) selon la revendication 18, **caractérisée en ce qu'**elle est configurée et adaptée pour ététer des poissons non abattus et/ou abattus et ouverts dans leur cavité abdominale, par le fait qu'une station de traitement de poissons (48) le long du trajet de transport T_{H} de l'appareil de convoyage suspendu (14) est configurée et adaptée en tant que dispositif d'étêtage (49).

20. Machine de traitement de poissons (47) selon la revendication 19, **caractérisée en ce que** le dispositif d'étêtage (49) comprend un appareil de séparation (50) pour séparer le corps de poissons suspendus par la tête, l'appareil de séparation (50) comprenant une paire de lames circulaires (51, 52) pouvant être entraînées en rotation, et les lames circulaires (51, 52) étant agencées en forme de V l'une par rapport à l'autre sur des côtés opposés du trajet de transport T_{H}.

21. Machine de traitement de poissons (47) selon la revendication 19 ou 20, **caractérisée en ce que**, dans la direction de transport T, un moyen de mesure (53) est agencé après l'appareil de convoyage (11) et avant le dispositif d'étêtage (49) dans le trajet de transport T_{H} de l'appareil de convoyage suspendu (14) pour détecter et/ou déterminer la position des os du col de chaque poisson suspendu.

22. Machine de traitement de poissons (47) selon une ou plusieurs des revendications 19 à 21, **caractérisée en ce que**, dans la direction de transport T, un moyen (54) de capture des nageoires pectorales est agencé après l'appareil de convoyage (11) pour le transport couché des poissons et avant le dispositif d'étêtage (49) dans le trajet de transport T_{H} de l'appareil de convoyage suspendu (14).

23. Procédé de transport de poissons transversalement à leur extension longitudinale dans une direction de transport T, comprenant les étapes suivantes :
- la mise en place individuelle des poissons sur un élément de transport (12) entraîné en rotation d'un appareil de convoyage (11) pour le transport couché des poissons le long d'un trajet de transport T_{L},
- le transport des poissons le long du trajet de transport T_{L} d'une zone d'entrée E de l'appareil de convoyage (11) à une zone de sortie A de l'appareil de convoyage (11),
les poissons étant automatiquement transférés de la position couchée à une position suspendue au moyen d'un appareil de reprise (13), par le fait que les poissons sont saisis par l'appareil de convoyage (11) au moyen de l'appareil de reprise (13) le long du trajet de transport T_{L} et sont amenés dans la position suspendue lors du transport le long d'un trajet de transport T_{H}, **caractérisé en ce que** chaque moyen de préhension (20) est transporté le long d'un appareil de convoyage suspendu (14) de l'appareil de reprise (13) dans un plan Ev, qui est orienté perpendiculairement au plan de transport E_{H}, au-delà du trajet de transport T_{L} de l'appareil de convoyage (11) le long du trajet de transport T_{H}, de telle sorte que les poissons saisis par la tête pivotent dans la position suspendue après avoir quitté l'appareil de convoyage (11).

24. Procédé selon la revendication 23, **caractérisé en ce que** le poisson est transporté dans la direction de transport T, ventre en avant, le dos appuyé sur des entretoises (31) d'une bande de convoyage (30) de l'élément de transport (12) s'étendant transversalement à la direction de transport T, et la tête appuyée contre un élément de butée (32) associé à la bande de convoyage (30) ; dans une section I de la bande de convoyage (30), des données pertinentes pour la taille des poissons, notamment l'épaisseur de la tête perpendiculairement au plan de transport E_{H} défini par la bande de convoyage (30) et/ou la largeur de la tête dans le plan de transport E_{H} dans la direction de transport T, étant enregistrées et/ou déterminées au moyen d'un moyen de mesure (41).

25. Procédé selon la revendication 24, **caractérisé en ce que** la position de l'axe de symétrie de la tête est déterminée à partir de l'épaisseur de la tête.

26. Procédé selon la revendication 24 ou 25, **caractérisé en ce que** le poisson est amené dans une section II de la bande de convoyage (30) à un moyen de préhension (20) qui saisit le poisson par la tête, la position de la tête perpendiculairement au moyen de préhension (20) étant ajustée par un réglage en hauteur de la section II de la bande de convoyage (30) en fonction des données enregistrées et/ou déterminées par le moyen de mesure (41), de telle sorte que la tête du poisson se situe dans le même plan dans la zone du moyen de préhension (20) que dans la zone du moyen de mesure (41).

27. Procédé selon une ou plusieurs des revendications 23 à 26, **caractérisé en ce que**, pour saisir la tête du poisson, un corps d'aiguillon (25, 27) pénètre dans la tête du poisson du côté ventral sur la mâchoire inférieure et du côté dorsal sur la mâchoire supérieure, par le fait que deux bras de préhension (24, 26) du moyen de préhension (20) portant les corps d'aiguillon (25, 27) sont déplacés d'une position de libération à une position de maintien.

28. Procédé selon la revendication 27, **caractérisé en ce que**, lors du transport le long du trajet de transport T_{L} de la section I à la section II de la bande de convoyage (30), les poissons sont positionnés par le bas entre les bras de préhension (24, 26) dans la position de libération qui sont déplacés dans le plan vertical E_{V} par le haut en direction de la bande de convoyage (30).

29. Procédé selon la revendication 27 ou 28, **caractérisé en ce que** les bras de préhension sont déplacés l'un vers l'autre dans le plan vertical Ev de telle sorte qu'un corps d'aiguillon (25) rigide avec un aiguillon individuel (23) pénètre complètement dans la tête du poisson par le côté dorsal, tandis qu'un deuxième corps d'aiguillon (27) monté de manière rotative avec au moins deux aiguillons (29) pénètre dans la tête par le côté ventral.

30. Procédé selon la revendication 29, **caractérisé en ce que** la vitesse de transport de la bande de convoyage (30) est modifiée en fonction des données enregistrées et/ou déterminées, notamment de la largeur de la tête dans le plan de transport E_{H} dans la direction de transport T, lorsqu'un poisson se trouve dans la zone du moyen de préhension (20), de telle sorte que le corps d'aiguillon (27) rotatif avec les au moins deux aiguillons (29) rencontre la tête du poisson en même temps que le corps d'aiguillon (25) rigide ou avant celui-ci dans le temps.

31. Procédé selon la revendication 30, **caractérisé en ce que** la vitesse de transport de la bande de convoyage (30) est modifiée lorsqu'un poisson se trouve dans la zone de sortie A de l'appareil de convoyage (11), de manière à éviter une collision de la bande de convoyage (30) ou des entretoises (31) agencées sur celle-ci avec le poisson qui se rabat, les modifications des vitesses de transport lors de la saisie des poissons d'une part et lors du rabattement des poissons d'autre part étant coordonnées entre elles par la division de la bande de convoyage (30).

32. Procédé selon une ou plusieurs des revendications 24 à 31, **caractérisé en ce que** les poissons arrivent avec leur tête de poisson sur un élément d'arrivée (43) pour l'enregistrement et/ou la détermination des données pertinentes pour la taille des poissons, de telle sorte que la tête de poisson est soulevée par rapport au plan de transport E_{H}.

33. Procédé selon la revendication 32, **caractérisé en ce que** les poissons arrivent également sur un élément d'arrivée (44) correspondant dans la zone du moyen de préhension (20), de telle sorte que les poissons se situent avec leur tête dans la zone du moyen de préhension (20) dans le même plan que dans la zone du moyen de mesure (41).
